# EUROPEAN PATENT SPECIFICATION

(11) **EP 3 936 803 B1**
(45) Date of publication and mention of the grant of the patent: **08.10.2025**
(21) Application number: 21190057.6
(22) Date of filing: 29.08.2019
(51) Int. Cl.: F25D 25/02, A47B 88/457

(54) **REFRIGERATOR**
KÜHLSCHRANK
RÉFRIGÉRATEUR

(30) Priority: 31.08.2018 KR 20180103971
(43) Date of publication of application: 12.01.2022
(62) Divisional of application: 19194355.4
(73) Proprietor: LG Electronics Inc., Seoul 07336 (KR)
(72) Inventor: CHOI, Kwanghyun, 08592 Seoul (KR)
(74) Representative: Vossius & Partner Patentanwälte Rechtsanwälte mbB

(56) References cited:
- CN-A- 107 388 718
- CN-B- 102 155 840
- US-A- 5 429 043
- US-A1- 2006 043 849
- US-A1- 2014 265 797

## Description

### BACKGROUND

The present invention relates to a refrigerator.

In general, refrigerators are home appliances for storing foods at a low temperature in a storage chamber that is covered by a door. For this, refrigerators cool the inside of the storage chamber by using cool air generated by being heat-exchanged with a refrigerant circulated through a refrigeration cycle to store foods in an optimum state.

In recent years, refrigerators have become increasingly multi-functional with changes of dietary lives and gentrification of products, and refrigerators having various structures and convenience devices for convenience of users and for efficient use of internal spaces have been released.

The storage chamber of the refrigerator may be opened/closed by the door. Also, refrigerators may be classified into various types according to an arranged configuration of the storage chamber and a structure of the door for opening and closing the storage chamber.

The refrigerator door may be classified into a rotation-type door that opens and closes a storage chamber through rotation thereof and a drawer-type door that is inserted and withdrawn in a drawer type.

Also, the drawer-type door is often disposed in a lower region of the refrigerator. Thus, when the drawer-type door is disposed in the lower region of the refrigerator, a user has to turn its back to take out a basket or foods in the drawer-type door. If the basket or the foods are heavy, the user may feel inconvenient to use the basket or may be injured.

In order to solve such a limitation, various structures are being developed in which the drawer-type door is capable of being elevated.

Representatively, a refrigerator in which a lifting mechanism for elevation a bin provided in a refrigerating compartment is disclosed in US Patent Registration No. US9,377,238.

However, this technique according to related art may have a structure in which the lifting mechanism for the elevation is disposed and exposed outside the bin to cause a serious safety problem. Also, there is a limitation that an outer appearance is poor due to the structure of the lifting mechanism exposed to the outside.

Also, since a driving part is exposed to the outside, noise during operation of the driving part may be transmitted to the outside as it is, which may cause the user's dissatisfaction.

Also, since the lifting mechanism is disposed inside the refrigerator, storage capacity within the refrigerator may be significantly reduced. This may cause a limitation that storage efficiency of the refrigerator is greatly reduced due to the loss in storage capacity of the whole refrigerator.

Also, the lifting mechanism is provided inside the refrigerator. Thus, separation of the door and separation of the lifting mechanism are required for service of the lifting mechanism to deteriorate serviceability.

Also, a driving part of the lifting mechanism has a structure for elevating the bin by pushing one end of the support assembly. Therefore, when a large heavy structure or a heavy object is disposed inside the bin, sufficient force for the elevation may not be provided. Of course, although a motor of the driving part increases in size to solve this limitation, there are limitations that an internal volume loss and noise become larger, and the manufacturing cost increases.

Also, the lifting mechanism may support one side of the entire bottom surface of the bin due to the arrangement position of the driving part, and therefore, the deflected load is inevitably generated when the bin is filled with the stored product. Also, a serious limitation may arise in stability due to an eccentric load acting in a state in which the door is withdrawn, and the elevating operation may not be performed smoothly.

US 2014/265797 A1 relates to refrigerators with a lift mechanism for lifting a storage bin.

US 5 429 043 A relates to a power operated system for raising and lowering an oven rack without opening the oven door.

US 2006/043849 A1 relates to a refrigerator having a basket lift apparatus capable of lifting a basket received in a body.

Further relevant prior art is disclosed in documents CN107388718A and CN102155840B.

### SUMMARY

The present invention is disclosed in the independent claim 1. Further embodiments are disclosed in the dependent claims.

In accordance with claim 1 a refrigerator includes: a cabinet configured to define a storage chamber: a door comprising a door part configured to open and close the storage chamber and a drawer part configured to provide a storage chamber; a rail configured to connect the door to the cabinet, the rail being configured to insert and withdraw the door; a driving device disposed on the door part to provide power; and an elevation device disposed on the drawer part, the elevation device being connected to the driving device to vertically elevate a portion of the drawer part, wherein the driving device includes: a motor assembly; a screw unit disposed on each of both sides with respect to the motor assembly, the screw unit being connected to the motor assembly to operate at the same time; and a lever configured to rotate by the screw unit, the lever being connected to the elevation device to provide power for elevating the elevation device, wherein the screw unit includes: a housing; a screw disposed in the housing, the screw being gear-coupled to a gear of the motor assembly to rotate; a screw holder penetrated by the screw, the screw having a screw thread corresponding to the screw to move along the screw; and a guide bar disposed parallel to the screw inside the housing, the guide bar passing through the screw holder to guide the movement of the screw.

The guide bar may be disposed on each of both sides with respect to the screw.

The guide bar may be made of a metal material.

A guide hole through which the guide bar passes may be defined in the screw holder.

An lubrication portion contacting the guide bar may be disposed inside the guide hole.

The driving device may include a cover portion configured to cover all of the motor assembly and the housings of both the screw assemblies.

Both screw units are disposed symmetrical to each other with respect to the motor assembly, and a distance between the screw units may be narrowed downward from an upper side.

The motor assembly may include: a motor disposed at an upper side; and a plurality of gears connected to a rotation shaft of the motor to rotate, wherein the plurality of gears may be continuously disposed in a vertical direction to extend up to a lower end of the screw.

A rotation shaft of the screw and the rotation shaft of the motor and the gears may be gear-coupled to cross each other.

A lower end of the screw and a gear disposed at the lowermost side of the motor assembly may be coupled to each other in a helical gear structure.

The plurality of gears may include: a driving gear coupled to the rotation shaft of the motor; an intersection gear connected to the screw; and at least one or more transmission gears configured to connect the driving gear to the intersection gear, wherein the intersection gear may include: a spur gear part having a spur gear shape and coupled to the transmission gear; and a second helical gear part coupled to a first helical gear part disposed on the lower end of the screw.

The door part may include: an outer plate configured to define an outer appearance; a door liner spaced apart from the outer plate to define a rear surface of the door part; and an insulation material filled between the outer plate and the door liner, wherein a recess part in which the driving device is accommodated may be defined in the door liner.

A door cover configured to cover the driving device may be disposed on the rear surface of the door part.

The drawer part is mounted on the door part, and a front surface of the drawer part may cover the driving device.

An accommodation part is provided in a rotation shaft of the lever, and a coupling part that is detachably coupled to the accommodation part is disposed on the elevation device.

A door cover configured to cover the driving device may be disposed on a rear surface of the door part, a cover opening that is opened at a position corresponding to the accommodation part may be defined in the door cover, and a drawer opening disposed at a position corresponding to the coupling part may be defined in a front surface of the drawer part.

The details of one or more embodiments are set forth in the accompanying drawings and the description below. Other features will be apparent from the description and drawings, and from the claims.

### BRIEF DESCRIPTION OF THE DRAWINGS

FIG. 1 is a front view of a refrigerator according to an embodiment.
FIG. 2 is a schematic view illustrating an elevation state of a lower drawer door of the refrigerator according to an embodiment.
FIG. 3 is a perspective view illustrating a state in which a container of the lower drawer door is separated.
FIG. 4 is an exploded perspective view illustrating a state in which a drawer part of the lower drawer door and a door part are separated from each other when viewed from a front side.
FIG. 5 is a rear view of the door part.
FIG. 6 is a rear view illustrating a state in which a door cover of the door part is removed.
FIG. 7 is a perspective view illustrating a state in which a driving device and an elevation device are connected to each other when viewed from a front side of the driving device.
FIG. 8 is a rear perspective view of the driving device.
FIG. 9 is a rear perspective view illustrating an internal structure of the driving device.
FIG. 10 is a partial enlarged view of a structure in which power is transmitted to a screw of the driving device.
FIG. 11 is a cross-sectional view taken along line 11-11' of FIG. 8.
FIG. 12 is a perspective view of the drawer part.
FIG. 13 is an exploded perspective view of the drawer part.
FIG. 14 is a perspective view of the elevation device according to an embodiment.
FIG. 15 is a view illustrating a state in which an upper frame of the elevation device ascends.
FIG. 16 is a view illustrating a state in which a lever is connected to the elevation device.
FIG. 17 is a perspective view illustrating a state in which the lower drawer door is closed.
FIG. 18 is a perspective view illustrating a state in which the lower drawer door is completely opened.
FIG. 19 is a cross-sectional view of the drawer door in a state in which a container of the lower drawer door completely descends.
FIG. 20 is a perspective view illustrating states of the driving device and the elevation device in the state of FIG. 19.
FIG. 21 is a view illustrating an elevation detection state in the state of FIG. 19.
FIG. 22 is a cross-sectional view of the drawer door in a state in which the container of the lower drawer door completely ascends.
FIG. 23 is a perspective view illustrating states of the driving device and the elevation device in the state of FIG. 22.
FIG. 24 is a view illustrating an elevation detection state in the state of FIG. 22.
FIG. 25 is a perspective view of a refrigerator according to another embodiment.
FIG. 26 is a perspective view of a refrigerator according to another embodiment.
FIG. 27 is a perspective view of a refrigerator according to another embodiment.

### DETAILED DESCRIPTION OF THE EMBODIMENTS

Hereinafter, some embodiments of the present disclosure will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

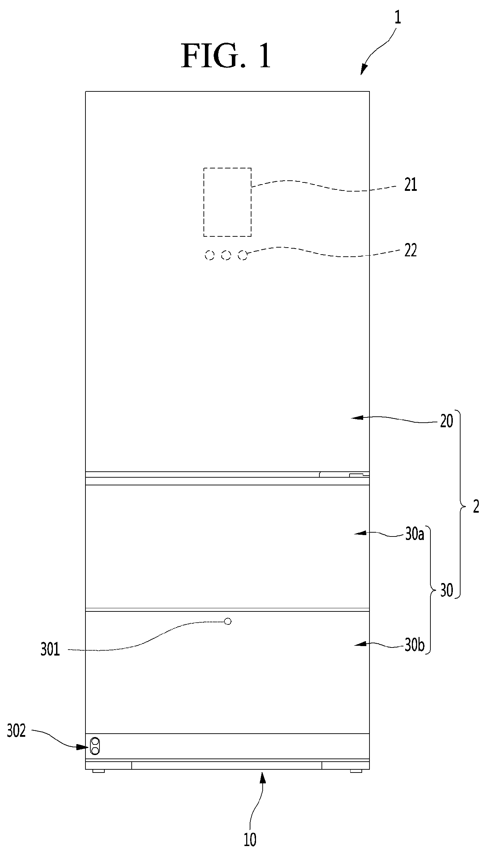

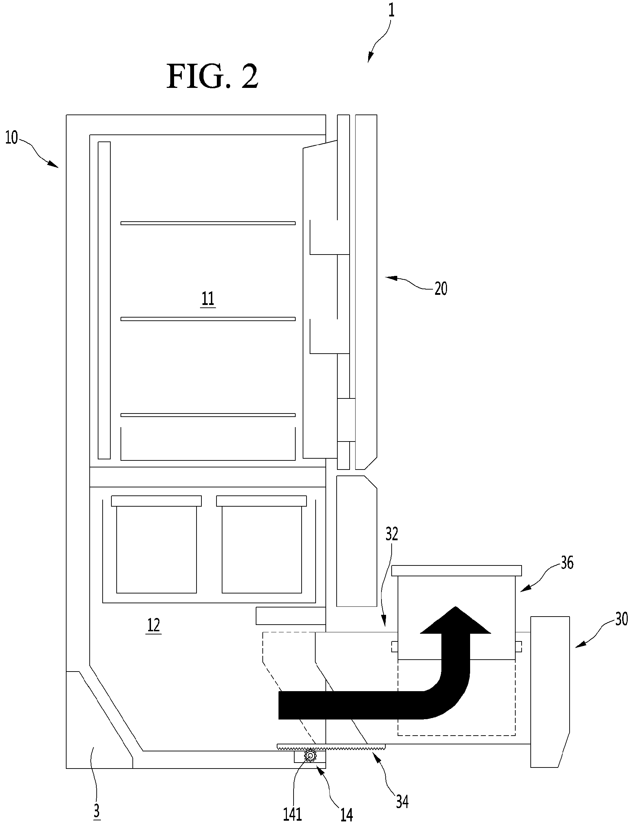

FIG. 1 is a front view of a refrigerator according to an embodiment. Also, FIG. 2 is a schematic view illustrating an elevation state of a lower drawer door of the refrigerator according to an embodiment.

Referring to FIGS. 1 and 2, a refrigerator 1 has an outer appearance that is defined by a cabinet 10 defining a , storage chamber and a door 2 covering an opened front surface of the cabinet 10.

The storage chamber of the cabinet 10 may be divided into a plurality of spaces. For example, an upper space 11 of the cabinet 10 may be provided as a refrigerating compartment, and a lower space 12 may be provided as a freezing compartment. Each of the upper space and the lower space may be provided as an independent space that is maintained at a different temperature, except for the refrigerating compartment and the freezing compartment. The upper space and the lower space may be called an upper space and a lower space.

The door 2 may be constituted by a rotation door 20 opening and closing the upper space through rotation thereof and a drawer door 30 opening and closing the lower space by being inserted or withdrawn in a drawer manner. The lower space may be vertically divided again. The drawer door 30 may be constituted by an upper drawer door 30a and a lower drawer door 30b.

Also, an outer appearance of each of the rotation door 20 and the drawer door 30 may be made of a metal material and be exposed to the front side.

Although the refrigerator in which all of the rotation door 20 and the drawer door 30 are provided is described, the present disclosure is not limited thereto. For example, the present disclosure may be applied to all refrigerators including a door that is inserted and withdrawn in the drawer type. Also, the rotation door 20 may be provided at an upper portion and thus called an upper door, and the drawer door 30 may be provided at a lower portion and thus called a lower door.

A display 21 may be disposed on one side of a front surface of the rotation door 20. The display 21 may have a liquid crystal display structure or a 88 segment structure.

Also, when the outer appearance of the door 2 is made of the metal material, a plurality of fine holes are punched in the display 21 to display information by using light passing therethrough.

Also, a manipulation part 22 that is capable of manipulating automatic rotation or withdrawal of the upper door 2 or the lower door 2 may be provided on one side of the rotation door 20.

The manipulation part 22 may be integrated with the display 21 and may operate in a touch manner or a button manner. The manipulation part 22 may input a command with respect to an overall operation of the refrigerator 1 and manipulate an insertion and withdrawal of the drawer door 30 or an elevation within the drawer door.

A manipulation part 301 may also be provided on the drawer door 30. The manipulation part 301 may be disposed on one side of the lower drawer door 30b, which is disposed at the lowermost portion, of the drawer door 30. The manipulation part 301 may operate in a touch or button manner. The manipulation part 301 may be provided as a sensor detecting proximity or movement of a user or provided as an input unit that operates by a user's motion or voice.

As illustrated drawing, a manipulation device 302 may be disposed on a lower end of the lower drawer door 30b to illuminate an image on a bottom surface and thereby to output a virtual switch and to input an operation in such a manner that the user approaches a corresponding area.

The lower drawer door 30b may be automatically inserted and withdrawn according to the manipulation of the manipulation part 301. Also, a food or container within the lower drawer door 30b may be elevated in a state in which the lower drawer door 30 is withdrawn by the manipulation of the manipulation part 301.

That is, the automatic insertion and withdrawal and/or automatic elevation of the lower drawer door 30b may be performed by at least one of a plurality of manipulation devices 22, 301, 302, and 303. As necessary, only one of the plurality of manipulation devices 22, 301, 302, and 303 may be provided.

The manipulation devices 22, 301, 302, and 303 may be used to insert/withdraw and elevate the drawer door 30. Also, the insertion/withdrawal and the elevation may be performed by a combination or sequential operation of the plurality of manipulation devices 22, 301, 302, and 303.

To accommodate the foods accommodated in the lower drawer door 30b, the lower drawer door 30b may be withdrawn forward to allow the container 36 within the lower drawer door 30b to be elevated.

The container 36 may have a predetermined height. Since the container 36 is seated on the elevation device 80 that will be described later, the height of the container 36 may increase by the height of the elevation device 80 when the elevation device 80 is elevated. Thus, when the elevation device 80 ascends, the container 36 may be disposed at a point at which the user is easily accessed to the container 36 and also easily lift the container 36.

Thus, the container 326 may be completely accommodated in the accommodation part 32 when the lower drawer door 30b is inserted and withdrawn. When the elevation device ascends, the container 36 may be disposed at a higher position than the lower storage chamber 12.

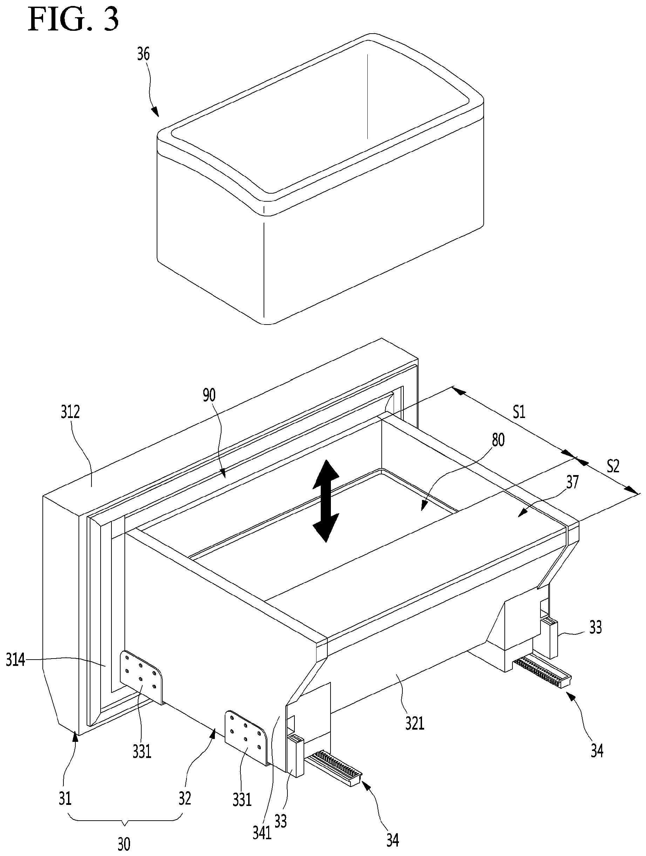

Although the shape of the container 36 is not limited, the container 36 may have a shape corresponding to the size of a front space (see reference symbol S1 of FIG. 3) and may have a predetermined height to prevent the stored food from being separated when the elevation device 80 ascends.

The food or container 36 inside the drawer door 30 disposed at the lowest position may be more easily lifted and used through the above-described manipulation.

The lower drawer door 30b may be automatically inserted and withdrawn forward and backward by the draw-out motor 14, the pinion 141 provided in the cabinet 10, and the draw-out rack 34 provided on the bottom surface of the lower drawer door 30b.

Also, the container inside the lower drawer door 30b may be elevated by the driving device 40 and the elevation device 80 provided in the lower drawer door 30b.

Hereinafter, the lower drawer door 30b and an operation of the lower drawer door 30b will be described in more detail, and also, the lower drawer door 30b will be called a drawer door or a door unless otherwise specified.

The embodiments are not limited to the number and shape of the drawer doors and may be applied to all refrigerators having a door that is inserted and withdrawn in a drawer type into/from the lower storage chamber.

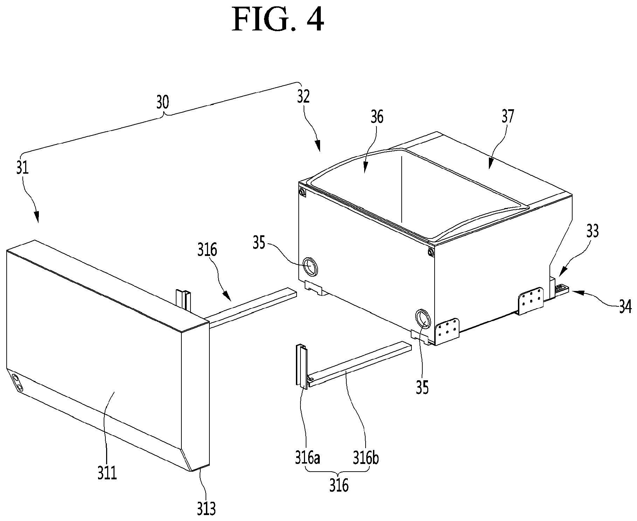

FIG. 3 is a perspective view illustrating a state in which a container of the lower drawer door is separated. Also, FIG. 4 is an exploded perspective view illustrating a state in which the drawer part of the lower drawer door and the door part are separated from each other when viewed from a front side.

Referring to FIGS. 1 to 4, the door 30 includes a door part 31 opening and closing the storage chamber and a drawer part 32 coupled to a rear surface of the door part 31 and inserted and withdrawn together with the door part 31.

The door part 31 may be exposed to the outside of the cabinet 10 to define an outer appearance of the refrigerator 1, and the drawer part 32 may be disposed inside the cabinet 10 to define an storage chamber. Also, the door part 31 and the drawer part 32 are coupled to each other and are inserted and withdrawn forward and backward together with each other.

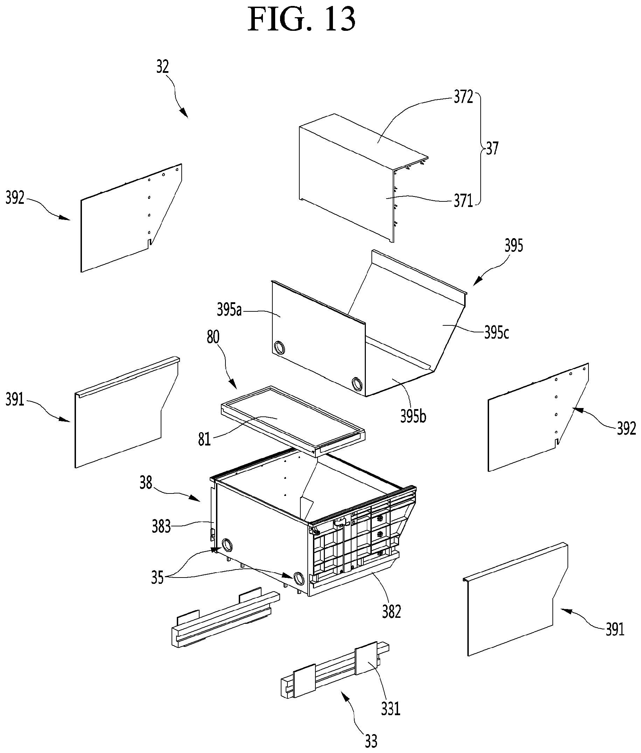

The drawer part 32 may be disposed on the rear surface of the door part 31 to define a space in which the food or container to be stored is accommodated. The inside of the drawer part 32 provides an upwardly opened storage chamber, and an outer appearance of the drawer part 32 may be defined by a plurality of plates (see reference numerals 391, 392, and 395 in FIG. 13).

Each of the plurality of plates 391, 392, and 395 may be made of a metal material and provided inside and outside the drawer part 32 so that the entire drawer part 32 is made of stainless steel or a material having a texture such as stainless steel.

In the state in which the door 30 is inserted, a machine room 3 in which a compressor and a condenser constituting a refrigeration cycle are provided may be disposed behind the door 30. Thus, a rear end of the drawer part 32 may have a shape of which an upper end further protrudes from a lower end, and an inclined surface 321 may be provided on a rear surface of the drawer part 32.

Also, a draw-out rail 33 guiding the insertion and withdrawal of the door 30 is provided on each of both side surfaces of the drawer part 32. The door 30 is mounted to be inserted into or withdrawn from the cabinet 10 by the draw-out rail 33. The draw-out rail 33 may be covered by an outer side plate 391 and thus may not be exposed to the outside. The draw-out rail 33 may have a rail structure that is capable of extending in multistage.

A rail bracket 331 may be provided in the draw-out rail 33, and the rail bracket 331 may extend from one side of the draw-out rail 33 to both sides of the drawer part 32. Also, the rail bracket 331 may be fixedly coupled to a sidewall surface inside the refrigerator. Thus, the drawer part 32, that is, the door 30, is mounted to the cabinet 10 by the draw-out rails 33.

Also, the draw-out rail 33 may be disposed on a lower end of each of both surfaces of the drawer part 32. Also, lower ends of both side surfaces of the drawer part 32 may be mounted to be seated from an upper side of the draw-out rail 33. Thus, the draw-out rail 33 may be called an under rail.

A draw-out rack 34 may be disposed on the bottom surface of th drawer part 32. The draw-out rack 34 may be disposed on each of both sides and be interlocked with an operation of a draw-out motor 14 mounted on the cabinet 10 to automatically insert and withdraw the door 30. That is, when an operation is inputted into the manipulation parts 22 and 301, the draw-out motor 14 may be driven to insert and withdraw the door 30 according to movement of the draw-out rack 34. Here, the door 30 may be stably inserted and withdrawn by the draw-out rail 33.

The draw-out rack 34 may not be provided on the drawer part 32. Here, the user may hold a side of the door part 31 to push and pull the door part 31 so that the door 30 is directly inserted and withdrawn.

The inside of the drawer part 32 may be divided into a front space S1 and a rear space S2. The elevation device 80 that is vertically elevated and a container seated on the elevation device 80 to be elevated together with the elevation device 80 may be disposed in the front space S1.

Although the container 36 is illustrated in the form of a basket having an opened upper portion, the container 36 may have a closed box structure such as a kimchi box. Also, a plurality of containers 36 may be stacked or arranged in parallel to each other.

Also, when the door 30 is withdrawn, the entire drawer part 32 may not be withdrawn to the outside of the storage chamber due to a limitation in draw-out distance of the door 30. That is, at least the front space S1 is withdrawn to the outside of the storage chamber, and the whole or a portion of the rear space S2 is disposed inside the storage chamber within the cabinet 10.

In such a structure, a draw-out distance of the door 30 may be limited by the draw-out rack 34 or the draw-out rail 33. As the draw-out distance becomes longer, the moment applied to the door 30 may become larger in the draw-out state, and thus it is difficult to maintain a stable state, and the deformation or damage of the draw-out rail 33 or the draw-out rack 34 may occur.

The elevation device 80 and the container 35 may be accommodated in the front space S1. While the elevation device is elevated, the food or container 36 seated on the elevation device 80 may be elevated together. Also, the elevation device 80 may be provided below the container 36, and the elevation device 80 may be covered by the container 36 when the container 36 is mounted. Thus, any constituent of the elevation device 80 will not be exposed to the outside.

A separate drawer cover 37 may be provided in the rear space S2. The front space S1 and the rear space S2 may be partitioned by the drawer cover 37. In a state in which the drawer cover 37 is mounted, a space in which front and top surfaces of the rear space S2 are covered and not be used may be not be exposed to the outside.

The drawer cover 37 may be mounted to cover the rear space S2 when the door 30 is withdrawn. In the state in which the door 30 is withdrawn, only the front space S1 may be exposed to provide more clean outer appearance. Also, a remaining space except for the space in which the elevation device 80 and the container 36 are mounted may be covered to prevent the foods from dropping or being jammed in a gap during the elevation.

However, when the drawer cover 37 is separated, the user may be accessible to the rear space S2, and thus, foods may be easily accommodated in the rear space S2. To utilize the rear space S2, a separate pocket or a container corresponding to the shape of the rear space may be disposed in the rear space S2.

Also, the elevation device 80 inside the drawer part 32 may be simply separated and mounted to utilize the entire space inside the drawer part 32, and the elevation device 80 and the drawer cover 37 may be separated from each other to utilize the entire space of the drawer part 32.

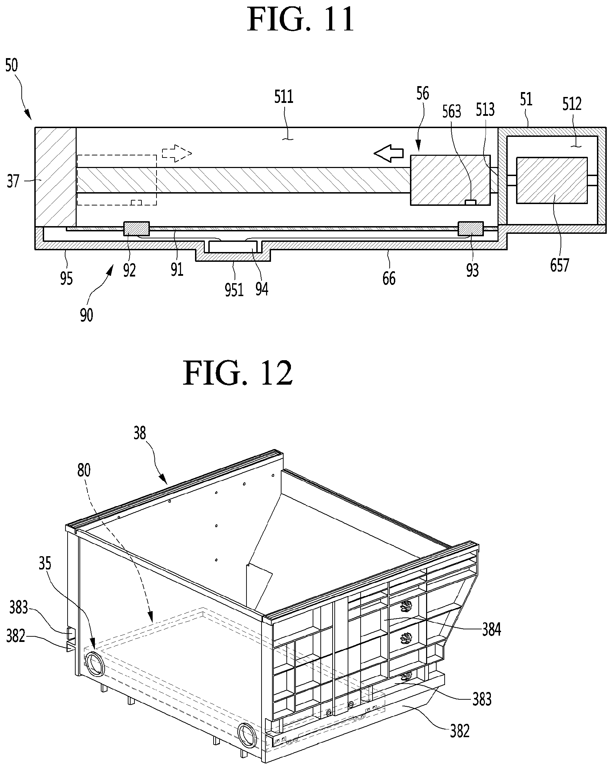

The outer appearance of each of the inner and outer surfaces of the drawer part 32 may be defined by the plates (see reference numerals 391, 392 and 395 of FIG. 12), which cover the components mounted on the drawer part 32, and thus, the outer and inner appearances may be seen to be neat. The plates (see reference numerals 391, 392, and 395 of FIG. 12) may be constituted by a plurality of plates and may be made of stainless steel to provide a more luxurious and clean appearance.

As illustrated in the drawings, the door part 31 and the drawer part 32 constituting the door 30 are coupled to be separated from each other. Thus, assembling workability and serviceability may be improved through the separable structure of the door part 31 and the drawer part 32.

A rear surface of the door part 31 and a front surface of the drawer part 32 may be coupled to each other. When the door part 31 and the drawer part 32 are coupled to each other, power for the elevation of the elevation device 80 is provided.

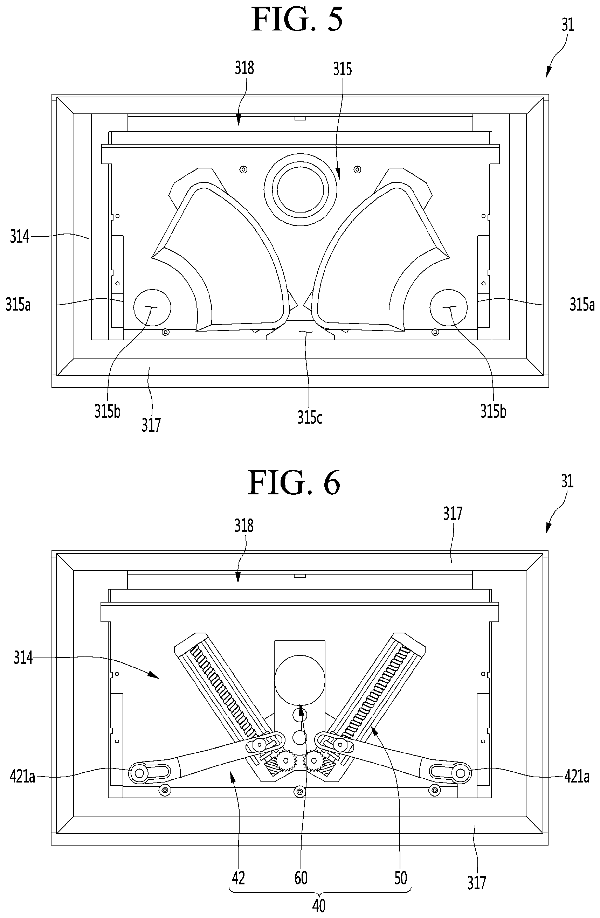

The driving device (see reference numeral 40 of FIG. 6) for elevating the elevation device 80 is disposed on the door part 31, and the door part 31 and the drawer part 32 are selectively connected to each other.

Particularly, the driving part (see reference numeral 40 of FIG. 6) provided in the door part 31 is configured to receive power from the power source and to transmit the power to the elevation part 80. Thus, it is possible to remove the door part 31 when the service of the driving part (see reference numeral 40 of FIG. 6) is necessary and to take measures simply by replacing only the door part 31.

The door part 31 and the drawer part 32 may be coupled by a pair of door frames 316 provided on both sides.

The door frame 316 may include a door coupling part 316a extending upward and downward to be coupled to the door part 31 and a drawer coupling part 316b extending backward from a lower end of the door coupling portion 316a.

The door coupling part 316a may be coupled to the door part 31 by a separate coupling member and may be coupled to one side of the door part 31 by a simple coupling structure. Also, the drawer coupling part 316b may be disposed to be inserted into both sides of the drawer part 32 so as to be adjacent to the draw-out rail 33. Also, the drawer coupling part 316b may be mounted on the drawer part 32 in the state of being coupled to the draw-out rail 33.

The drawer coupling part 316b may be inserted into the drawer part 32 to support the drawer part 32 in a state in which the door coupling part 316a is coupled to the door part 31. Also, the drawer coupling part 316b may be coupled to the drawer part 32 by a separate coupling member or may be coupled by a structure that mutually match the drawer coupling part 316b.

Also, a drawer opening 35 through which a portion of the elevation device 80 is exposed may be defined in the front surface of the drawer part 32 so that the driving device 40 and the elevation device 80 are connected to each other when the door part 31 and the drawer part 32 are coupled to each other.

The door part 31 is configured to substantially open and close the storage chamber of the cabinet 10 and to define the front surface of the refrigerator 1.

The door part 31 may have an outer appearance that is defined by an outer case 311 defining a front surface and a portion of a circumferential surface, a door liner 314 defining a rear surface, and an upper deco 312 and a lower deco 313 which respectively define top and bottom surfaces. Also, an insulation material 300 may be filled in the inside of the door part 31 between an outer case 311 and a door liner 314.

Hereinafter, the door part 31 constituting the door 30 and the driving device 40 provided in the door part 31 will be described in more detail with reference to the drawings.

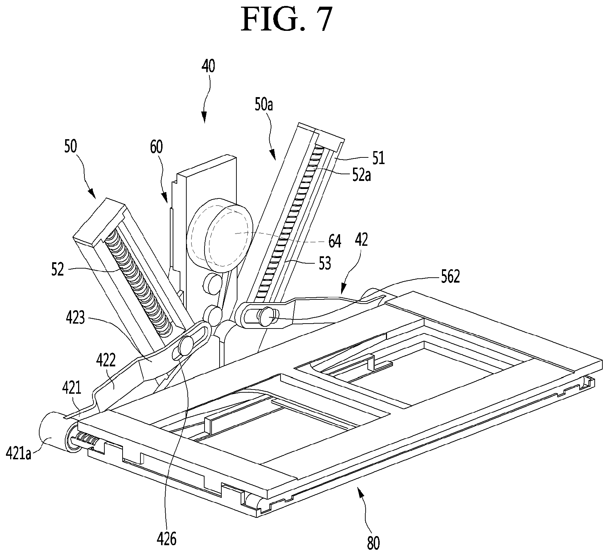

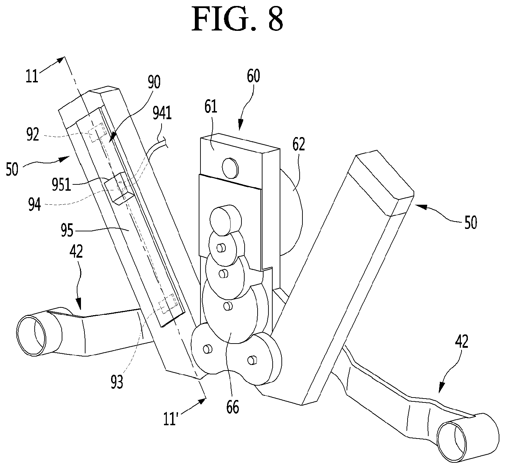

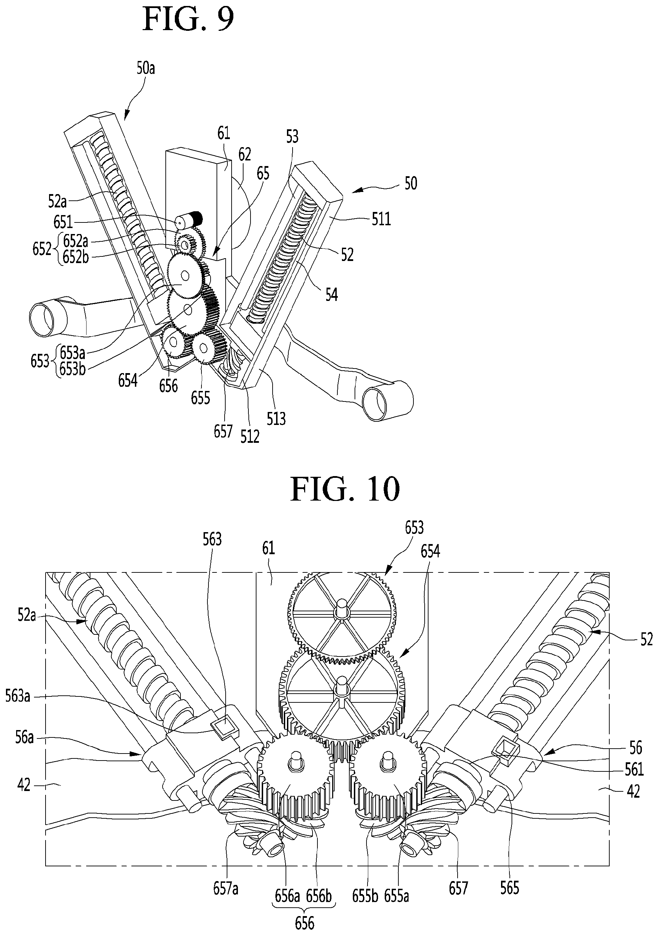

FIG. 5 is a rear view of the door part. Also, FIG. 6 is a rear view illustrating a state in which a door cover of the door part is removed. Also, FIG. 7 is a perspective view illustrating a state in which the driving device and the elevation device are connected to each other when viewed from a front side of the driving device. Also, FIG. 8 is a rear perspective view of the driving device. Also, FIG. 9 is a rear perspective view illustrating an internal structure of the driving device. Also, FIG. 10 is a partial enlarged view of a structure in which power is transmitted to a screw of the driving device. Also, FIG. 11 is a cross-sectional view taken along line 11-11' of FIG. 8.

Referring to FIGS. 4 to 11, a front surface of the door part 31 may be defined by the out plate 311, and a rear surface may be defined by the door liner 314.

Also, a driving device 40 for operating the elevation device 80 is provided on the door part 31. Although the driving device 40 may be disposed inside the door part 31, the driving device 40 is not embedded in the insulation material but is disposed inside the space defined by the door liner 314. Then, the driving device 40 may be covered by the door cover 315 and thus may not be exposed to the outside.

In detail, the insulating material may be filled between the outer plate 311 and the door liner 314 to insulate the inside of the storage chamber 12.

Also, the door liner 314 may have a door recess part that is recessed inward. The door recess part may be defined in a shape corresponding to the shape of the driving device 40 and may be recessed inside the door 30. Also, the door recess part may be recessed so that electric components including the lighting unit 318 for illuminating the inside of the refrigerator are further mounted.

The lighting unit 318 may be defined to be long in the lateral direction from the left side to the right side of the rear surface of the door 30 and may be disposed at the uppermost position of the inner side regions of a gaskets 317 disposed along the rear surface of the door 30.

The lighting unit 318 may be configured so that light emitted from the plurality of LEDs is emitted to the inside of the door 30, particularly, the inside of the drawer part 32. When the door 30 is withdrawn to be opened, the lighting unit 318 may illuminate the inside of the drawer part 32.

The door cover 315 may be configured to define an outer appearance of the rear surface of the door part 31 and may cover the driving device 40 mounted on the door part 31. The door cover 315 may have a plate shape to cover the driving device 40 so that the door cover 315 is not exposed in the driving device 40 is mounted.

The door cover 315 may have the cover recess part at a corresponding position to cover the driving device 40 from the rear side. The cover recess part may be recessed from the front surface of the door cover 315, i.e., the driving device 40, and the rear surface of the door cover 315 may protrude toward the inside of the storage chamber.

Also, a side cutout part 315a may be defined in the left and right ends of the door cover 315. The side cutout part 315a may be a portion that exposes the supporter 319 to be coupled with the door frame 316 and may be defined inward in a shape corresponding to the supporter 319.

Also, a door opening 315b may be defined in each of both sides of a lower end of the door cover 315. An accommodation part 421a of the lever 42, which is one component of the driving device 40, may be exposed through the cover opening 315b. Thus, the user may be accessible to the accommodation part 421a through the cover opening 315b. Also, the cover opening 315b may be disposed to face the drawer opening 35.

Thus, when the door par 31 and the drawer part 32 are coupled to each other, the cover opening 315b and the drawer opening (see reference numeral 35 of FIG. 13) may communicate with each other. Thus, the accommodation part 421a and the coupling part 842c of the elevation device 80 may be coupled to each other through the cover opening 315b and the drawer opening 35. That is, the driving device 40 and the elevation device 80 are connected to each other, and the elevation device 80 is elevated according to an operation of the driving device 40. Also, only the elevation device 80 may be separated by separating the accommodation part 421a from the coupling part 842c in the state in which the door part 31 and the drawer part 32 are coupled to each other.

A cable hole 315c may be further defined in the lower end of the door cover 315 to allow the cable to be connected to the electric components such as the driving device 40 and the lighting unit 318, which are provided in the door part 31. The electric wire that is accessible through the cable hole 315c may be connected to the cabinet 10 via the lower side of the drawer part 32.

The door gasket 317 may be provided along the rear surface of the door part 31. When the door 30 is closed, the door gasket 317 may airtightly contact the front surface of the cabinet 10 in the state in which the door 30 is closed.

The driving part 40 may be disposed inside the door part 31 by being covered by the door cover 315. The power of the driving device 40 is transmitted to the elevation device 80. Here, the power may be transmitted to both sides of the elevation device 80 so that the elevation device 80 ascends and descends in the horizontal state at both left and right sides without being tilted or biased to one side under any situation.

Hereinafter, a structure of the driving device 40 will be described in detail.

The driving device 40 includes a motor assembly 60, a pair of screw units 50 and 50a disposed on both sides of the motor assembly 60, and a pair of levers 42 respectively connected to the pair of screw units 50 and 50a.

In detail, the motor assembly 60 is disposed at a central portion in left and right direction of the door part 31. Also, the driving device 40 allows both the screw units 50 and 50a and the lever 42 to operate by the motor assembly including one driving motor 64.

Particularly, the motor assembly 60 may adjust decelerating and magnitude of the transmitting force through a combination of a plurality of gears.

Also, the motor assembly 60 may have a structure in which the driving motor 64 and the gears are arranged vertically to minimize a space recessed when the motor assembly 60 is mounted on the door part 31, in particular, a width in the left and right direction is widened, and a thickness in the front and rear direction is minimized.

Also, the driving motor 64 constituting the motor assembly 60 may protrude toward the drawer part 32 to minimize a depth of the door part 31 to secure insulation performance.

The driving motor 64 may provide power for elevating the elevation device 80 and may rotate forwardly and reversely. Thus, when an elevation signal of the elevation device 80 is inputted, the elevation device 80 may rotate forwardly and reversely to provide the power for elevating the elevation device 80. Also, an input of a stop signal due to the load of the driving motor 64 or the detection of the sensor may be stopped.

The motor assembly may include a motor case 61 in which the driving motor 64 is installed and a motor cover 62 coupled to the motor case 61 to cover the driving motor 64.

A rotation shaft of the driving motor 64 may protrude from the motor case 61 in a direction opposite to the motor cover 62. Also, the motor assembly may further include a power transmission part that transmits power of the driving motor 64. The power transmission part may be disposed at an opposite side of the driving motor 64 with respect to the motor case 61.

Also, the power transmission part may be constituted by a combination of a plurality of gears and be covered by the cover member 68 mounted on the opposite side of the driving motor 64.

The power transmission part may include a driving gear 651 connected to the shaft of the driving motor 64 passing through the motor case 61. The power transmission part may further include a first transmission gear 652 engaged with the driving gear 651 at a lower portion of the driving gear 651.

For example, the first transmission gear 652 may be a multi-stage gear. For example, the first transmission gear 652 may include a first gear 652a engaged with the drive gear 651 and a second gear 652b having a diameter less than that of the first gear 652a. Each of the first gear 652a and the second gear 652b may be a spur gear.

The power transmission part may further include a second transmission gear 653 engaged with the first transmission gear 652. The second transmission gear 653 may be engaged with the first transmission gear 652 at the lower portion of the first transmission gear 652. The second transmission gear 653 may include a first gear 653a engaged with the second gear 652a of the first transmission gear 652 and a second gear 653b having a diameter greater than that of the first gear 653a.

Each of the first gear 653a and the second gear 653b of the second transmission gear 653 may be a spur gear. Also, the second gear 653b of the second transmission gear 653 may be disposed below the first gear 652a of the first transmission gear 652. Thus, a longitudinal width of the driving part 60 may be prevented from increasing by the first transmission gear 652 and the second transmission gear 653.

The power transmission part may further include a third transmission gear 654 engaged with the second transmission gear 653. The third transmission gear 654 may be engaged with the second gear 653b at a lower portion of the second gear 653b of the second transmission gear 653. The third transmission gear 654 may be a spur gear. A portion of the third transmission gear 654 may be arranged to overlap the second transmission gear 653 in the longitudinal direction.

The motor case 61 may be provided with a gear shaft for rotatably supporting the plurality of transmission gears.

The power transmission part may include a pair of intersection gears 655 and 656 that engage with the third transmission gear 654. The pair of intersection gears 655 and 656 are disposed to be spaced apart from each other in the horizontal direction and may be engaged with the third transmission gear 654 at a position lower than the center of rotation of the third transmission gear 654.

Each of the intersection gears 655 and 656 may include spur gear parts 655a and 656a, each of which has the form of a spur gear, and first helical gear parts 656b and 656b, each of which has the form of a helical gear so that each of the intersection gears 655 and 656 is engaged with the third transmission gear 654.

Also, rotation center lines of the intersection gears 655 and 656 spaced from each other on both left and right sides may extend horizontally to each other.

The power transmission unit may further include a pair of second helical gear parts 657 and 657a that are respectively engaged with the intersection gears 655 and 656.

The second helical gear parts 657 and 657a may be engaged with the first helical gear parts 655b and 656b. The rotation center lines of the second helical gear parts 657 and 657a may be arranged to cross the rotation center lines of the intersection gears 655 and 656. Thus, the first and second helical gear parts 655b and 656b and the second helical gear parts 657 and 657a may be coupled to each other in the crossing state to transmit rotation force with respect to each other.

The rotation center lines of the intersection gears 655 and 656 may extend in the longitudinal direction, and the rotation center lines of the second helical gear parts 657 and 657a may extend in the vertical direction. The rotation center lines of the second helical gear parts 657 and 657a disposed on both the left and right sides may be inclined in a direction that is away from each other upward.

The use of the pair of intersection helical gears may facilitate switching of the power transmission direction to realize a compact structure for the power transmission. Particularly, even when large force is transmitted for the elevation of the elevation device 80, large noise may not be generated.

The pair of screw units 50 and 50a are disposed on both the left and right sides of the motor assembly 60.

The pair of screw units 50 and 50a may be disposed on both the left and right sides of the inside of the door unit 31. The pair of screw units 50 and 50a may have the same structure and shape as each other except for their mounting positions.

The power of the drive motor 64 may be transmitted from the lower portions of the screw unit 50 and 50a.

Here, the screw units 50 on both sides are symmetrical to each other with respect to the motor assembly 60. Thus, the motor assembly 60 is disposed between the screw units 50 disposed on both the sides. The screw units 50 disposed on both the sides may be gradually close to each other from upper ends to lower ends.

The screw units 50 and 50a include screws 52 and 52a that rotate by receiving the power of the driving motor 64. The screws 52 and 52a may extend in the vertical direction. Here, the upper end of each of the screws 52 and 52a may be inclined toward the outer side, and the lower end may be inclined toward the outer side.

The screws 52 and 52a may be connected to the second helical gear parts 657 and 657a. The screws 52 and 52a may rotate together when the second helical gear parts 657 and 657a rotate.

For example, an insertion part may be defined in each of the second helical gear parts 657, 657a, and an accommodation groove into which the insertion part is accommodated may be defined in the screw 52.

Thus, the screws 52 and 52a are disposed symmetrically on both sides of the motor assembly 60 and may be inclined in the same center line as the center line of the second helical gear parts 657 and 657a. Thus, the screws 52 and 52a on the left and right sides may be arranged in a direction that is away from each other toward the upper side.

The screw units 50 and 50a further include screw holders 56 and 56a coupled to the screws 52 and 52a so as to pass therethrough.

The screw holders 56 and 56a move vertically along the screws 52 and 52a when the screws 52 and 52a rotate. The lever 42 may be coupled to the screw holders 56 and 56a. The lever 42 may rotate when the screw holders 56 and 56a move.

A holder through-hole 561 may be defined in a center of each of the screw holders 56 and 56a. The holder through-hole 561 may be defined to pass through the screw holders 56 and 56a, and the screws 52 and 52a may be inserted and mounted to pass through the holder through-hole 561. A screw thread coupled to the screw may be disposed on an inner surface of the holder through-hole 561. When the screws 52 and 52a rotate, the screw holders 56 and 56a are movable along the screws 52 and 52a.

A guide hole 565 may be defined in both left and right sides of the holder through-hole 561. The guide hole 565 may pass through the guide bars 53 and 54, which will be described below, and the screw holders 56 and 56a may move along the guide bars 53 and 54.

Each of the guide bars 53 and 54 may have a round rod shape and may be made of a metal material to stably support the screw holders 56 and 56a.

A bearing may be provided on an inner surface of the guide hole 565 to facilitate the movement of the screw holders 56 and 56a. Also, although not shown, a sleeve-shaped lubrication member that is penetrated by the guide bars 53 and 54 may be provided in the guide hole 565. The lubrication member may be made of engineering plastic or a friction reducing material. Thus, the screw holders 56 and 56a may move more easily and may not generate the noise. Alternatively, as necessary, the screw holders 56 and 56a themselves may be made of an engineering plastic material.

The pair of guide bars 53 and 54 may be configured to pass through the guide holes 565. Thus, the screw holders 56 and 56a may be stably elevated without moving horizontally. The elevation device 80 may be stably elevated even under a heavy load, and the noises may not be generated.

Also, the screw holder 56a may be provided with a magnet 563. For example, the screw holder 56a may have a magnet mounting groove 563a into which the magnet is press-fitted and may have a structure in which the magnet 563 is inserted into the magnet mounting groove 563a.

The magnet 563 may detect a position of the screw holder 56a. When the screw holder 56a is disposed at the lowermost or uppermost end of each of the screws 52 and 52a, an elevation detection device 90 described below may detect the screw holder 56a. That is, whether the ascending or descending of the elevation device is completed may be determined by detecting the magnet 563 mounted on the screw holder 56a.

Also, although not shown in detail, a structure in which a holder connector 562 is capable of being mounted may be provided on an opposite side of the rear surface of the screw holder 56a in which the magnet 563 is provided, i.e., on the front surface of the screw holder 56a.

The holder connector 562 may connect the lever 42 to the screw holders 56 and 56a and may be fixedly mounted on the screw holders 56 and 56a. That is, the holder connector 562 may be coupled to the screw holders 56 and 56a while passing through the lever 42. The lever 42 may include a rectangular slot 426 to prevent an interference with the holder connector 562 during the rotation of the lever 42.

Since the screw units 50 and 50a are disposed on both the left and right sides, extension lines of the screws 52 and 52a on both the left and right sides may cross each other outside the driving device 40.

The lever 42 may connect the screw holder 56 and 56a to the elevation device 80. Thus, both ends of the lever 42 may be rotatably coupled to the screw holder 56 and 56a and the elevation device 70, respectively.

The screw units 50 and 50a further include a housing 51 for accommodating the screws 52 and 52a.

The housing 51 may define an outer appearance of the screw unit 50 and provide a space in which the screws 52 and 52a and the screw holder 56 and 56a are accommodated. The opened portion of the housing 51 may be covered by the cover member 66.

The housing 51 may be made of a metal material to be bent or made of a plastic material.

The housing 51 may include a first accommodation part 511 accommodating the screws 52 and 52a and a second accommodation part 512 accommodating the second helical gear parts 657 and 657a.

The first accommodation part 511 and the second accommodation part 512 may be partitioned by the partition wall 513. The second accommodation part 512 may be disposed below the first accommodation part 511.

A portion of the intersection gears 655 and 656 may be accommodated in the second accommodation part 512. That is, the intersection gears 655 and 656 and the second helical gear parts 657 and 657a may be connected to each other in the second accommodation part 512.

A lower portion of each of the screws 52 and 52a may pass through the partition wall 513, and the second helical gear parts 657 and 657a may be coupled to the screws 52 and 52a passing through the partition wall 513.

The housing 51 may be provided with one or more guide bars 53 and 54 guiding the ascending of the screw holders 56 and 56a. The one or more guide bars 53 and 54 extend in parallel with the screws 52 and 52a while being spaced apart from the screws 52 and 52a.

The plurality of guide bars 53 and 54 may be provided in the housing 51 so that the screw holders 56 and 56a are not inclined to any one side of the left or right sides with respect to the screws 52 and 52a. Here, the screw 52 may be disposed between the plurality of guide bars 53 and 54.

The motor case 61 and the pair of housings 51 may be integrated with each other. A single cover member 66 may cover the motor case 61 and the pair of housings 51.

That is, the cover member 66 may be coupled to the motor case 61 to cover the power transmission part and be coupled to the pair of housings 51 to cover the screws 52 and 52a, the guide bars 53, and the screw holders 56 and 56a.

Alternatively, as necessary, the cover member 66 may include a plurality of portions that cover the power transmission part and the screw units 50 and 50a, respectively, and may be configured to independently open and close the respective parts.

Since the driving device 40 is in the form of a single module, the driving part 40 may be compact and be easily installed in the door part 31.

The single cover member 66 may cover the motor case 61 and the pair of housings 51 together. Thus, when the cover member 66 is separated, the user may easily accessible to the motor case 61 and the pair of housings 51.

The screw unit 50a disposed at one side of the left and right screw units 50 and 50a may be provided with the elevation detection device 90. Since the screw units 50a on both the left and right sides operate simultaneously by the one motor assembly 60, the operation of the elevation device 80 may be effectively performed even if the elevation detection device 90 is provided in only one screw unit 50a. Thus, the elevation detection device 90 may be provided on either one of the left and right screw units 50 and 50a.

The elevation detection device 90 may be configured to determine whether the elevation of the elevation device 80 is completed. Here, it may be determined whether the elevation device 80 is completely elevated based on the operation of the driving device 40.

The elevation detection device 90 may be mounted on the cover member 66 and vertically disposed along the screw unit 50a.

The elevation detection device 90 may include a support plate 91, detection sensors 92 and 93 mounted on the support plate 91, and a case 95 accommodating the support plate 91.

In detail, the support plate 91 may have a length greater than that of at least the shaft 52a or stroke of the screw holder 56a. The support plate 91 may be disposed on a first area 511 on which the screw holder 56a moves and may be disposed along a path along which the magnet 563 moves. Both ends of the support plate 91 may be fixedly mounted on the partition wall 513 and caps 57 of the upper ends of the screw units 50 and 50a.

The support plate 91 may have a plate shape, and a pair of detection sensors 92 and 93 may be mounted on both sides of the support plate 91. The support plate 91 may be made of a plate-like material that is fixedly mounted on detection positions of the detection sensors 92 and 93. Also, the support plate 91 may be a substrate on which the detection sensors 92 and 93 are mounted.

A sensor for detecting the magnet 563 may be used as each of the detection sensors 92 and 93. The detection sensor may be a hall sensor that normally detects the position of the magnet. Alternatively, as necessary, other sensors or devices for detecting the magnet 563 may be provided instead of the hall sensor.

Also, other configurations or devices that are capable of detecting a specific position of the screw holder 56a may be used instead of the magnet 563 and the hall sensor.

One of the detection sensors 92 and 93 may mounted at a position corresponding to the position of the magnet 563 when the elevation device 80 completely ascends, and another one may be mounted at a position corresponding to the position of the magnet 563 when the elevation device 80 completely descends. Thus, when any one detection sensor 92 or 93 of the pair of detection sensors 92 and 93 recognizes the magnet, it is determined that the elevation device 80 completely ascends or descends.

The support plate 91 on which the detection sensors 92 and 93 are mounted may be accommodated in the case 95. The case 95 may be a portion of the cover member 66. The case 95 may be recessed from the inner surface of the cover member 66 and provide a space in which the support plate 91 is accommodated. The case 95 may be separately provided and mounted on the cover member 66.

The case 95 may define a space for accommodating the support plate 91. The case 95 may further include a connector mounting part 951 provided with a connector 94. The connector mounting part 951 may protrude to accommodate the connector 94 therein.

The connector 94 may be connected to an electric wire extending from the pair of the detection sensors 92 and 93 and be connected to an electric wire 941 from the outside. That is, it may be possible to connect the electric wire to the connector 94 from the outside without separating the support plate 91 or the detection sensors 92 and 93.

When the support plate 91 is the substrate on which the detection sensors 92 and 93 are mounted, the connector 94 may be disposed on the support plate 91 corresponding to the connector mounting part 951.

FIG. 12 is a perspective view of the drawer part. Also, FIG. 13 is an exploded perspective view of the drawer part.

Referring to FIGS. 3, 13, and 13, the drawer part 32 may include a drawer body 38 defining an entire shape of the drawer part 32, an elevation device 80 provided in the drawer body 38 to elevate the container and food, and a plurality of plates 391, 392, and 393 defining an outer appearance of the drawer part 32.

In detail, the drawer body 38 may be injection-molded by using a plastic material and define an entire shape of the drawer part 32. The drawer body 38 may have a basket shape having an opened top surface to define a food storage chamber therein. An inclined surface 321 may be disposed on a rear surface of the drawer body 38. Thus, an interference with the machine room 3 may not occur.

The door frames 316 may be mounted on both sides of the drawer part 32. The door frame 316 may be coupled to the lower frame of each of both sides of the bottom surface or both left and right surfaces of the drawer part 32. In the state in which the door frame 316 and the drawer part 32 are coupled to each other, the drawer part 32 and the door part 31 may be integrally coupled to be inserted and withdrawn.

The door frame 316 and the drawer part 32 may be coupled to each other by a separate coupling member or a coupling structure between the door frame 316 and the drawer unit 32.

The draw-out rack 34 may be disposed on each of both the sides of the bottom surface of the drawer part 32. The drawer part 32 may be inserted and withdrawn forward and backward by the draw-out rack 34. In detail, in the state in which the drawer part 32 is mounted on the cabinet 10, at least a portion is disposed in the storage chamber. Also, the draw-out rack 34 may be coupled to a pinion gear 141 disposed on the bottom surface of the storage chamber. Thus, when the draw-out motor 14 is driven, the pinion gear 141 may rotate to allow the draw-out rack 34 to move, and the door 30 may be inserted and withdrawn.

The door 30 may not be automatically inserted and withdrawn. That is, the user may push or pull the door 30 to be inserted and withdrawn. Here, the draw-out rack 34 may be omitted, and thus, the insertion and withdrawal may be performed through only the draw-out rail 33.

A rail mounting part 382 on which the draw-out rail 33 for guiding the insertion and withdrawal of the drawer body 38 is mounted may be disposed on a lower portion of each of both the side surfaces of the drawer body 38. The rail mounting part 382 may extend from a front end to a rear end and provide a space in which the draw-out rail 33 is accommodated.

The draw-out rail 33 may be a rail that extends in multistage. The draw-out rail 33 may have one end fixed to the storage chamber inside the cabinet 10 and the other end fixed to the rail mounting part 382 to more stably realize insertion and the withdrawal of the door 30.

Also, the plurality of plates 391, 392, and 393 made of a plate-shaped metal material such as stainless steel to define at least portions of the inside and outside of the drawer body 38 may be provided on the drawer body 38.

In detail, the outer side plate 391 may be disposed on each of both left and right surfaces of the outside of the drawer body 38. The outer side plate 391 may be mounted on each of both the left and right surfaces of the drawer body 38 to define an outer appearance of each of both the side surfaces. Particularly, the constituents such as the door frame 316 and the draw-out rail 33, which are mounted on both the sides of the drawer body 38 may not be exposed to the outside.

A plurality of reinforcement ribs 384 may cross each other in vertical and horizontal directions on both outer surfaces of the drawer body 38. The reinforcement ribs 384 may reinforce the strength of the drawer body 38 itself so that the drawer body 38 is more rigidly shaped relative to the weight of the door, which increases by providing the driving device 40 and the elevation device 80.

Also, the reinforcement ribs 384 may support the outer side plates 391 mounted on both side surfaces, and thus the outer appearance of the drawer part 32 may be firmly maintained.

An inner side plate 392 may be disposed on each of both left and right surfaces of the inside of the drawer body 38. The inner side plate 392 may be mounted on each of both the side surfaces of the drawer body 38 to define both the left and right surfaces of the inside thereof.

The inner plate 395 may be constituted by a front surface part 395a, a bottom surface part 395b, and a rear surface part 395c, which have sizes correspond to the front surface, the bottom surface, and the rear surface of the inside of the drawer body 38.

The inner plate 395 may be provided by bending the plate-shaped stainless material so that the inner plate 395 defines the inner surface of the remaining portion except for both the left and right surfaces of the drawer body 38. Also, both left and right ends of the inner plate 395 may contact the inner side plate 392. The front surface part 395a, the bottom surface part 395b, and the rear surface part 395c constituting the inner plate 395 may be separately provided and then coupled to or contact each other.

The entire inner surfaces of the drawer body 38 may be defined by the inner side plate 392 and the inner plate 395, and the inner surface of the drawer body 38 may provide texture of the metal.

Thus, the storage chamber within the drawer part 32 may have a metal texture on the whole, and the foods accommodated in the drawer part 32 may be more uniformly cooled and thus stored at a low temperature in the more uniform region. In addition, visually excellent cooling performance and storage performance may be provided to the user.

The drawer cover 37 may include a cover front part 371 that partitions the inside of the drawer body 38 into a front space S1 and a rear space S2 and a cover top surface part 372 bent from an upper end of the cover front surface part 371 to cover a top surface of the rear space S2.

That is, when the drawer cover 37 is mounted, only the front space S1, in which the elevation device 80 is disposed, may be exposed in the drawer body 38, and the rear space S2 may be covered by the drawer cover 37.

The elevation 80 may be disposed in the drawer body 38. The elevation device 80 is connected to the driving device 40 and may be vertically movable. The left and right sides of the elevation device 80 may be elevated uniformly.

A drawer opening 35 may be defined in the lower part of the front surface of the drawer part 32 for coupling the elevation device 80 to the driving device 40.

The elevation device 80 is provided as a scissors type so that the elevation device is folded in a descending state and unfolded in an ascending state. Thus, the container or food seated on the upper surface may be elevated.

Also, the elevation device 80 may be provided with a support plate 81, and the support plate 81 may provide a seating surface on which the container 36 or food is seated.

The height of the drawer opening 35 may be lower than the upper end of the elevation device 80, i.e., the upper surface of the support plate 81. Thus, the drawer opening 35 may be prevented from being seen from the inside of the drawer part 32 in any state in the state in which the elevation device 80 is mounted.

In addition, the support plate 81 may have a size and a shape corresponding to the front space to prevent foreign matters from being introduced into the elevation device 80 provided below the front space S1, and also, to fundamentally prevent safety accidents from occurring by blocking the access to the elevation device 80.

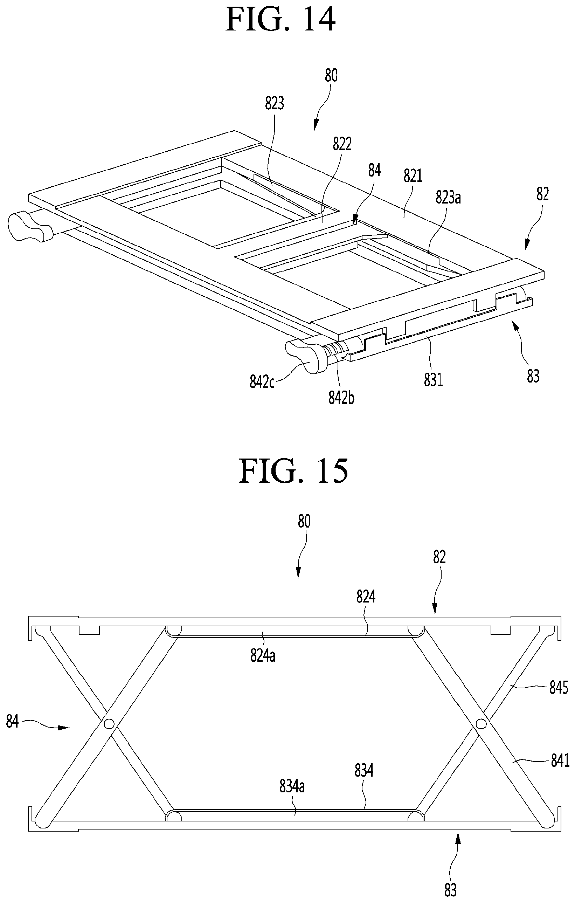

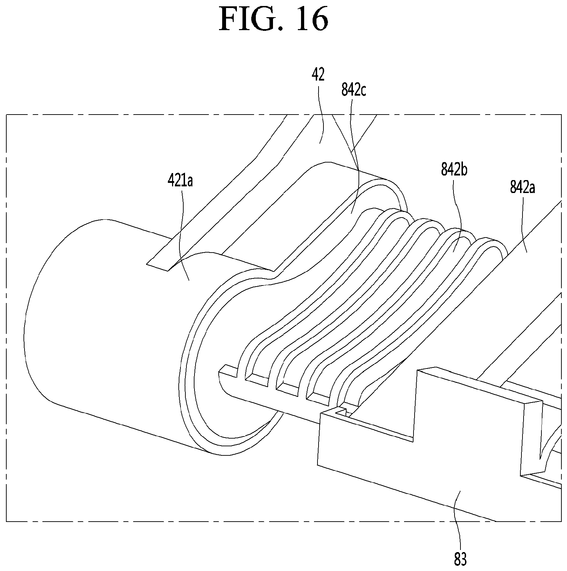

FIG. 14 is a perspective view of the elevation device according to an embodiment. Also, FIG. 15 is a view illustrating a state in which an upper frame of the elevation device ascends. Also, FIG. 16 is a view illustrating a state in which the lever is connected to the elevation device.

Referring to FIGS. 14 to 16, the elevation device 80 may be provided on the bottom surface of the inner side of the drawer part 32 and may be detachably installed on the inside of the drawer part 32.

Also, the elevation device 80 includes an upper frame 82, a lower frame 83, and a scissors assembly 84 disposed between the upper frame 82 and the lower frame 83.

In detail, the upper frame 82 may have a square frame shape corresponding to the size of the inner front space S1 of the drawer part 32 and to mount the support plate 81 on the top surface thereof.

The upper frame 82 of the elevation device 80 may move upward and downward and substantially supports food or the container 36 together with the support plate 81.

The upper frame 82 may generally defines a frame part 821 which defines a circumferential shape of the upper frame 82 and a partition part 822 for partitioning the space inside the frame portion 821 into left and right sides.

Since the frame part 821 and the partition part 822 define an outer frame and support the support plate 81, high strength may be required, and thus, the frame part 821 and the partition part 822 may be made of a metal and may have shape in which both ends are bent to increase the strength and prevent deformation.

Also, a slide guide 824 may be disposed on a bottom surface of the frame part 821 to accommodate the end of the scissors assembly 84 and guide the movement of the scissors assembly 84.

The scissors assemblies 84 may be disposed in both the spaces 823 and 824 of the partition 822, respectively.

The slide guide 824 may define a long hole 824a through which the scissors assembly 84 pass. The scissors assembly 84 may move along the slide guide 824.

The lower frame 83 may have the same or similar structure as the upper frame 82 except for a direction.

The lower frame 83 may include a frame part and a partition part. Also, the slide guide 834 which guides movement of the scissors assembly 84 by accommodating an end of the scissors assembly 84 may be disposed on a top surface of the lower frame 83.

The slide guide 834 may define a long hole 834a through which the scissors assembly 84 pass. The scissors assembly 84 may move along the slide guide 834.

The scissors assemblies 84 may be provided on both right and left sides. The scissors assemblies 84 on both sides may receive power from one driving motors 64 to operate and thus may be elevated at the same height.

Thus, the scissors assembly 84 may be effectively elevated by the pair of the scissors assemblies 84 which independently apply the forces to both sides even when the heavy load is supported by the scissors assembly 84. Here, the upper frame 82, i.e., the support plate 81 may be elevated in a horizontal state through the scissor assembly 84.

The scissors assembly 84 may include a first scissors frame 841 in the form of a square frame and a second scissors frame 845 in the form of a rectangular frame rotatably connected to the first scissors frame 841 have.

The second scissors frame 845 may have a horizontal width less than that of the first scissors frame 841. Thus, the second scissors frame 845 may be connected to the first scissors frame 841 while being disposed within an area defined by the first scissors frame 841.

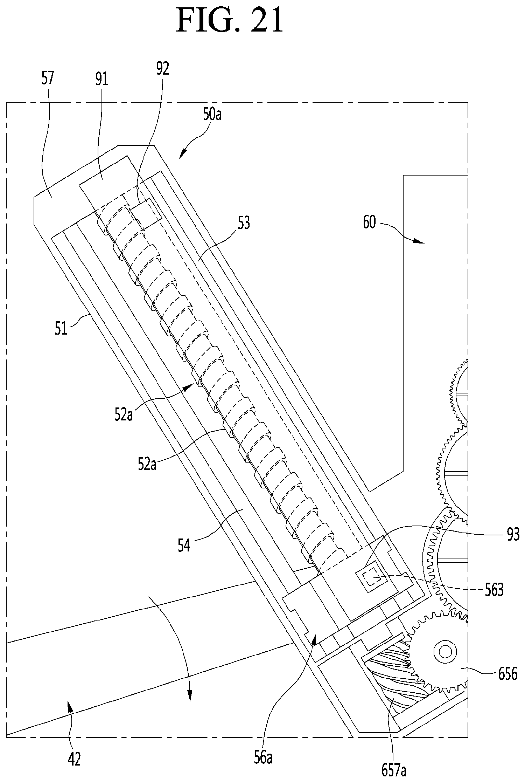

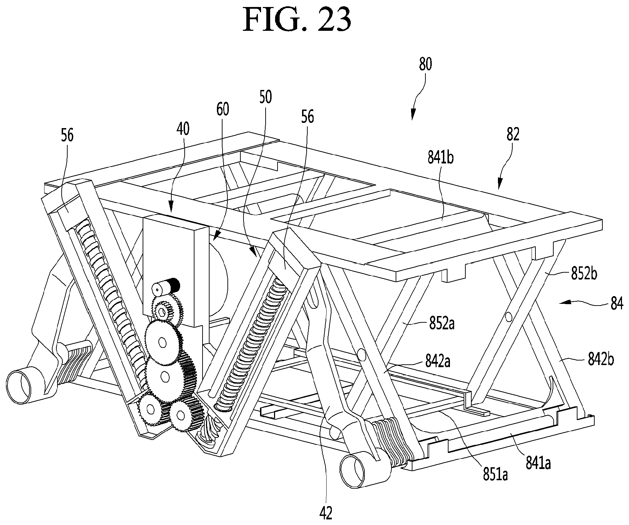

The first scissors frame 841 may include a lower shaft (see reference numeral 841a of FIG. 21) and an upper shaft (see reference numeral 841b of FIG. 23) extending in the horizontal direction.

The lower shaft (see reference numeral 841a of FIG. 23) may rotatably supported by the lower frame 83, and the upper shaft (see reference numeral 841b of FIG. 23) may be arranged to pass through the sliding guide 824 of the upper frame 82 .

The first scissors frame 841 may be connected to a first rod (see reference numeral 841a of FIG. 23) and an upper shaft (see reference numeral 841b of FIG. 23) extending in the vertical direction.

The second scissors frame 845 may include a lower shaft 851a and an upper shaft (not shown), which extend in the horizontal direction and a first rod 852a and a second rod 852b, which extend in the vertical direction.

The first rod 842a of the first scissors frame 84 may have an extension part 842b protruding to be connected to the lever 42 and a coupling part 842c provided on an end of the extension part 842b.

The lever 42 includes an accommodation part 421a accommodating the coupling part 842c so as to be coupled to the coupling part 842c.

An end of the coupling part 842c has a non-circular shape. Thus, the lever 42 may be prevented from being loosened with the coupling part 842a when the lever 42 rotates while the coupling part 842c is accommodated in the accommodation part 421a.

The coupling part 842a and the extension part 842b may extend to pass through the drawer opening 35, and the extension part 842b may be disposed on the drawer opening 35. The elevation device 80 inside the drawer part 32 may be connected to the driving device 40 outside the drawer part 32 by the extension part 842b and the coupling part 842a.

Hereinafter, a state in which the door 30 of the refrigerator 1 is inserted and withdrawn and is elevated according to an embodiment will be described in more detail with reference to the accompanying drawings.

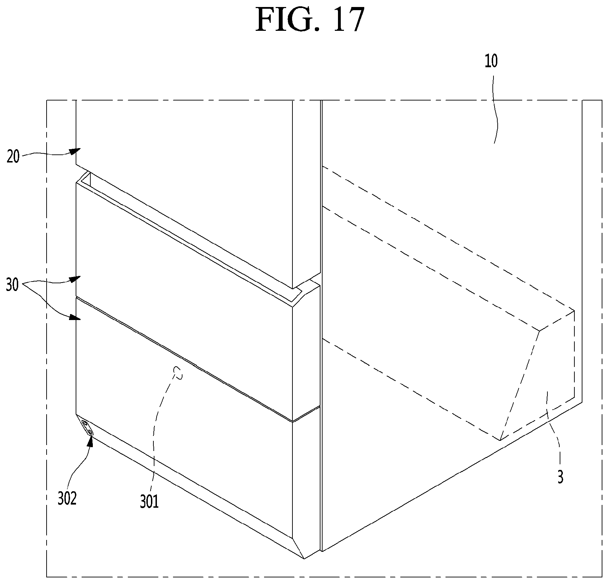

FIG. 17 is a perspective view illustrating a state in which the lower drawer door is closed.

Referring to FIG. 17, in the state in which the food is stored, the refrigerator 1 may be maintained in a state in which all of the rotation door 20 and the door 30 are closed. In this state, the user may withdraw the door 30 to accommodate the food.

The door 30 may be provided in plurality in a vertical direction and be withdrawn to be opened by the user's manipulation.

Here, the user's manipulation may be performed by touching the manipulation part 301 disposed on the front surface of the rotation door 20 or the door 30. Alternatively, an opening command may be inputted on the manipulation device 302 provided on the lower end of the door 30.

Also, the manipulation part 301 and the manipulation device 302 may individually manipulate the insertion and withdrawal of the door 30 and the elevation of the elevation member 80. Alternatively, the user may hold a handle of the door 30 to open the drawer door 30.

Hereinafter, although the lower drawer door 30b of the doors 30, which are disposed in the vertical direction, is opened and elevated as an example, all of the upper and lower doors 30 may be inserted and withdrawn and elevated in the same manner.

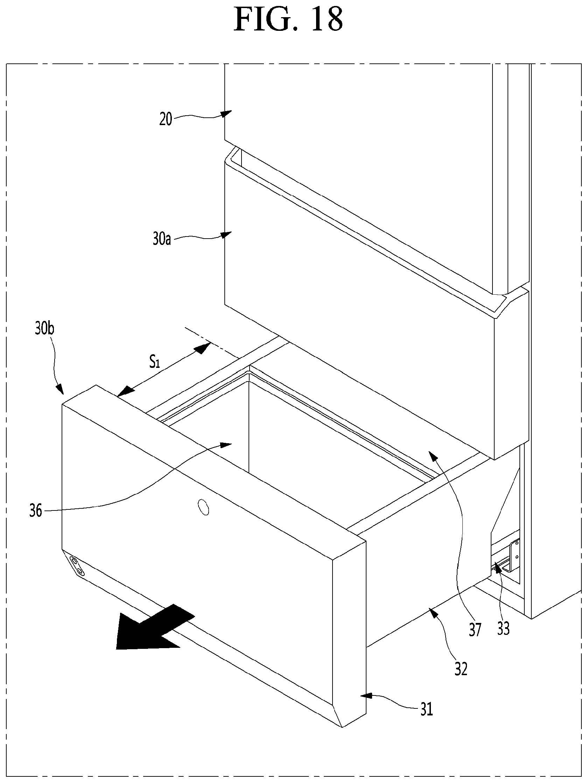

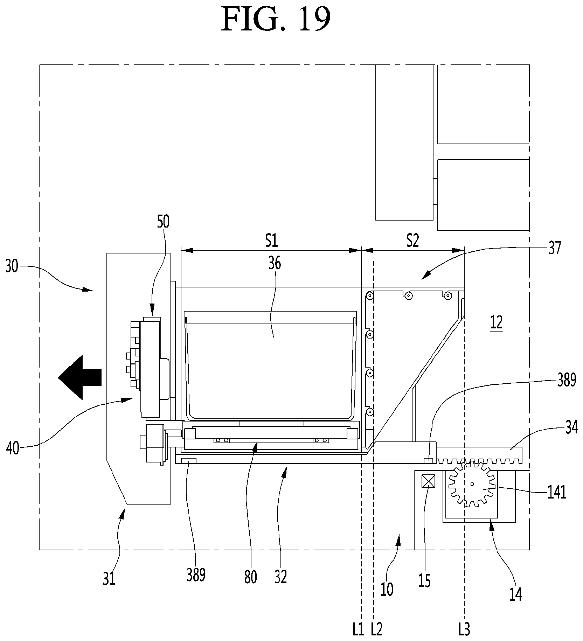

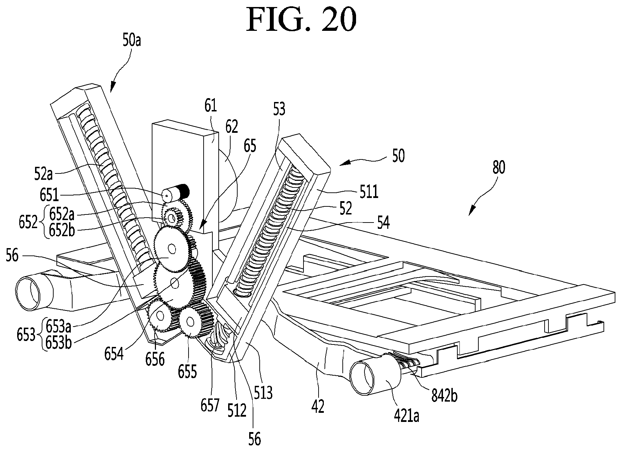

FIG. 18 is a perspective view illustrating a state in which the lower drawer door is completely opened. Also, FIG. 19 is a cross-sectional view illustrating a state of the drawer door in a state in which the basket of the drawer door completely descends. Also, FIG. 20 is a perspective view illustrating states of the driving device and the elevation device in the state of FIG. 19. Also, FIG. 21 is a view illustrating an elevation detection state in the state of FIG. 19.

Referring to FIGS. 18 to 21, the user may manipulate the lower drawer door 30b to withdraw the lower drawer door 30b forward. The lower drawer door 30b may be withdrawn while the draw-out rail 33 extends.

The lower drawer door 30b may be configured to be inserted and withdrawn by the driving of the draw-out motor 14, not by a method of directly pulling the lower drawer door 30b by the user.

The draw-out rack 34 provided on the bottom surface of the lower drawer door 30b may be coupled to the pinion gear 141 rotating when the draw-out motor 14 provided in the cabinet 10 is driven. Thus, the lower drawer door 30b may be inserted and withdrawn according to the driving of the draw-out motor 14.

The draw-out distance of the lower drawer door 30b may correspond to a distance at which the front space S1 within the drawer part 32 is completely exposed to the outside. Thus, in this state, when the elevation device 80 is elevated, the container or the food may not interfere with the doors 20 and 30 or the cabinet 10 disposed thereabove.

Here, the draw-out distance of the lower drawer door 30b may be determined by a draw-out detection device 15 disposed on the cabinet 10 and/or the lower drawer door 30b.

The draw-out detection device 15 may be provided as a detection sensor that detects a magnet 389 to detect a state in which the lower drawer door 30b is completely withdrawn or closed.

For example, as illustrated in the drawings, the magnet 389 may be disposed on the bottom of the drawer part 32, and the detection sensor may be disposed on the cabinet 10. The draw-out detection device 15 may be disposed at a position corresponding to a position of the magnet 389 when the lower drawer door 30b is closed and a position of the magnet 389 when the lower drawer door 30b is completely withdrawn. Thus, the draw-out state of the lower drawer door 30b may be determined by the draw-out detection device 15.

Also, as necessary, a switch may be provided at each of positions at which the lower drawer door 30b is completely inserted and withdrawn to detect the draw-out state of the lower drawer door 30b. In addition, the draw-out state of the lower drawer door 30b may be detected by counting the rotation number of draw-out motor 14 or measuring a distance between the rear surface of the door part 31 and the front end of the cabinet 10.

In the state in which the lower drawer door 30b is completely withdrawn, the driving motor 64 may be driven to elevate the elevation device 80. The elevation device 80 may be driven in an even situation in which the lower drawer door 30b is sufficiently withdrawn to secure safe elevation of the food or container 36 seated on the elevation device 80.

That is, in the state in which the lower drawer door 30b is withdrawn to completely expose the front space S1 to the outside, the elevation device 80 may operate to prevent the container 36 or the stored food seated on the elevation device 80 from interfering with the doors 20 and 30 or the cabinet 10.

In details of the draw-out state of the lower drawer door 30b, the front space S1 has to be completely withdrawn to the outside of the lower storage chamber 12 in the state in which the lower drawer door 30b is withdrawn for the elevation.

Particularly, the rear end L1 of the front space S1 has to be more withdrawn than the front end L2 of the cabinet 10 or the upper door 20. Also, the rear end L1 of the front space S1 is disposed at a further front side than the front end L2 of the cabinet 10 or the door 20 so at to prevent the elevation device 80 from interfering when the elevation device 80 is elevated.

Also, when the elevation device 80 is completely withdrawn to be driven, the entire drawer part 32 may not be completely withdrawn but withdrawn up to only a position for avoiding interference when the elevation device 80 is elevated as illustrated in FIG. 19. Here, at least a portion of the rear space S2 of the drawer part 32 may be disposed inside the lower storage chamber 12. That is, the rear end L3 of the drawer portion 32 may be disposed at least inside the lower storage chamber 12.

Thus, even when the weight of the stored object is added to the weight of the lower drawer door 30b itself including the driving device 40 and the elevation device 80, the deflection or damage of the draw-out rail 33 or the lower drawer door 30b itself may not occur to secure the reliable draw-out operation.

The ascending of the elevation device 80 may start in a state in which the lower drawer door 30b is completely withdrawn. Also, to secure the user's safety and prevent the food from being damaged, the ascending of the elevation device 80 may start after a set time elapses after the lower drawer door 30b is completely withdrawn.

After the lower drawer door 30b is completely withdrawn, the user may manipulate the manipulation part 301 to input the ascending of the elevation device 80. That is, the manipulation part 301 may be manipulated to withdraw the door 30, and the manipulation part 301 may be manipulated again to drive the elevation device 80.

Also, in the state in which the lower drawer door 30b is manually inserted and withdrawn, the manipulation part 301 may be manipulated to drive the elevation device 80.

As illustrated in FIG. 19, the driving device 40 and the elevation device 80 may not operate until the lower drawer door 30b is completely withdrawn, and the elevation device 80 may be maintained in the lowest state.

In a state before the elevation device 80 ascends, the lever 42 and the screw holder may be disposed at the lowest position, and the elevation detection device 90 may detect this position to determine that the present state is a state in which the elevation device 80 completely descends.

In detail, the screw holder 56a may be disposed at the lowest position when the elevation device 80 completely descends. The magnet 563 provided in the screw holder 56a may be disposed at a position corresponding to the detection sensor 93 disposed below the pair of the detection sensors 92 and 93. The detection sensor 93 disposed below detects the magnet 563 to determine that the elevation device 80 completely descends.

When it is determined that the elevation device 80 completely descends by the elevation detection sensor 90, the driving device 40 may start an operation when the user's manipulation occurs or when the lower drawer door 30b is completely withdrawn.

If it is determined that the elevation device 80 does not completely descend, the elevation detection device 90 may output an abnormal signal, and thus, the driving device 40 may not operate.

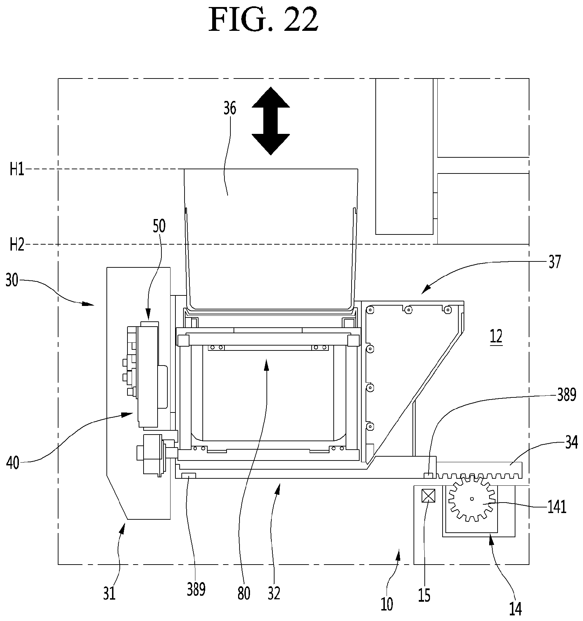

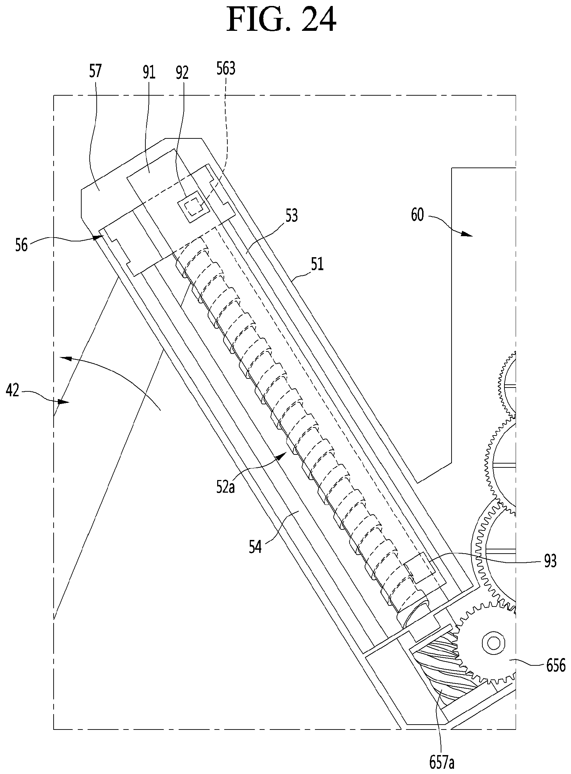

FIG. 22 is a cross-sectional view of the drawer door in a state in which the container of the lower drawer door completely ascends. Also, FIG. 23 is a perspective view illustrating states of the driving device and the elevation device in the state of FIG. 22. Also, FIG. 24 is a view illustrating an elevation detection state in the state of FIG. 22.

Referring to FIGS. 22 to 24, in the state in which the lower drawer door 30b is withdrawn, when an operation signal of the driving device 40 is inputted, the driving device 40 may operate, and the state as illustrated in FIG. 22 may be obtained by elevating the elevation device 80.

In this embodiment, the ascending of the elevation device 80 may mean that the upper frame 82 ascends by the scissors assembly 84, and the descending of the elevation device 80 may mean that the upper frame 82 descends by the scissors assembly 84.

The driving device 40 is connected to the elevation device 80 so that the power is transmitted to the elevation device 80. The power may be transmitted to the elevation device 80 together with the operation of the driving device 40, and the elevation device 80 may start to ascend.

In detail, when the driving motor 64 rotates in the normal or reverse direction by the ascending/descending signal of the elevation device 80, the operation of the driving device 40 may start.

In details of the ascending operation of the elevation device 80, the driving gear 651 may rotate by the operation of the driving motor 64. The rotational force of the driving motor 64 may be transmitted to the intersection gears 655 and 656 through the first to third transmission gears 652, 653, and 654 by the rotation of the driving gear 651.

The second helical gear parts 657 and 657a connected to the intersection gears 665 and 656 may rotate by the intersection gears 655 and 656 to change the power transmission direction. The screws 52 and 52a connected to the second helical gear parts 657 and 657a may rotate.

Since the same rotation force is transmitted to the screws 52 and 50a on both sides, the screw holders 56 and 56a may ascend by the same height.

As the screw holders 56 and 56a ascends, the lever 42 connected to the screw holders 56 and 56a may also rotate. The height of the lever 42 increases while the lever 42 connected to the screw holders 56 and 56a rotates, and the height of the first rod 842a of the first scissors frame 84 connected to the lever 42 may increase by the increase in height of the lever 42.

The scissors assembly 84 may be unfolded by the increase in height of the first rod 842a of the first scissors frame 84.

As a result, the scissors assembly 84 may be unfolded so that the upper frame 82 ascends, and the container 36 or the food placed on the support plate 81 may ascend, and finally, the elevation device 80 may ascend to its maximum height as illustrated in FIG. 22.

The elevation device 80 may continuously ascend and then be stopped when ascending to a sufficient height to facilitate the access to the food or container 36 seated on the elevation device 80 as illustrated in FIG. 22. In this state, the user may easily lift the food or container 36 without overtaxing the waist.

The lever 42 and the screw holder may be disposed at the highest position, and the elevation detection device 90 may detect the highest position to determine that the present state is a state in which the elevation device 80 completely ascends.

In detail, the screw holder 56a may be disposed at the highest position when the elevation device 80 completely ascends. Also, the magnet 563 provided in the screw holder 56a may be disposed at a position corresponding to the detection sensor 92 disposed above the pair of the detection sensors 92 and 93. The detection sensor 93 disposed below may detect the magnet 563 to determine that the elevation device 80 completely ascends to be in a state of completely ascending.

If it is determined that the elevation device 80 completely ascends by the elevation device 90, the driving motor 64 may be stopped. In this state, although the elevation device 80 is disposed inside the drawer part 32, the food or container 36 seated on the elevation device 80 may be disposed at a position higher than the opened top surface of the drawer part 32. Thus, the user may easily access the food or container 36.

Particularly, it is not necessary to allow the waist excessively for lifting the container 36, so that it is possible to perform safer and more convenient operation.

In details of the maximally ascending state of the elevation device 80, the elevation device 80 may be disposed at least at a lower position than the upper end of the drawer part 32.

In the driving device 80, when viewed with respect to the container 36 in the state in which the container 36 is seated, the upper end H1 of the container 36 may ascend to a position higher than the upper end H2 of the lower storage chamber 12. Here, the height of the container 36 may reach a height suitable for the user to reach the container 36 without stretching his/her waist.

That is, the driving device 40 may have a structure in which the container 36 ascends from the inside of the drawer part 32. However, when the container 36 is mounted on the elevation device 80, the container 36 may be disposed at an accessible height.

After the user's food storing operation is completed, the user may allow the elevation device 80 to descend by manipulating the manipulation part 301. The descending of the elevation device 80 may be performed by reverse rotation of the elevation motor 64 and may be gradually performed through the reverse procedure with respect to the above-described procedure.

Also, when the elevation device 80 completely descends, the state shown in FIG. 19 may be obtained. The completion of the descending of the elevation device 80 may be also performed by the elevation detection sensor 90. When the magnet is detected by the detection sensor 93 disposed below, the elevation device 80 may determine that the descending is completed, and the driving device 40 may be stopped.

Also, after the driving of the elevation motor 64 is stopped, the lower drawer door 30b may be inserted. Here, the lower drawer door 30b may be closed by the user's manipulation or by the driving of the draw-out motor 14. When the lower drawer door 30b is completely closed, the state of FIG. 17 may be obtained.

In addition to the foregoing embodiment, various embodiments may be exemplified.

Hereinafter, another embodiments will be described with reference to the accompanying drawings. In the other embodiments of the present disclosure, the same reference numerals are used for the same components as those of the above-described embodiments, and a detailed description thereof will be omitted.

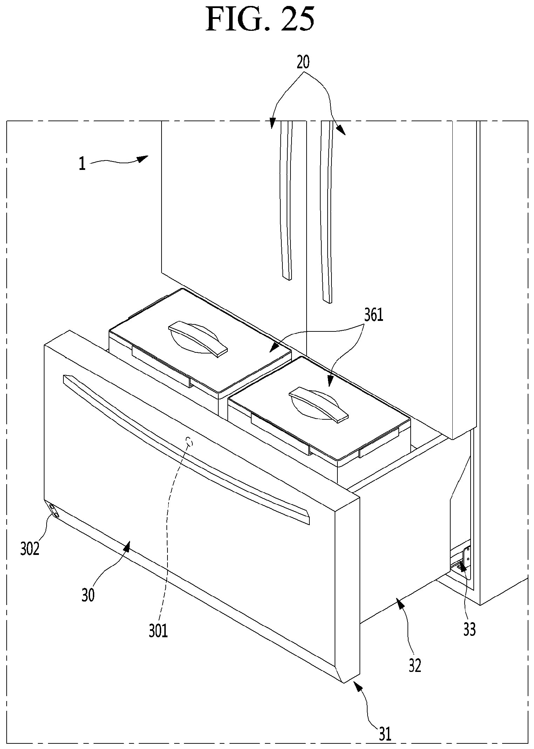

FIG. 25 is a perspective view of a refrigerator according to another embodiment.

Referring to FIG. 25, a refrigerator 1 according to another embodiment includes a cabinet 10 having a storage chamber that is vertically partitioned and a door opening and closing the storage chamber.

The door may include a rotation door 20 which is provided in an upper portion of a front surface of the cabinet 10 to open and close an upper storage chamber and a door 30 disposed in a lower portion of the front surface of the cabinet 10 to open and close a lower storage chamber.

The door 30 is inserted and withdrawn forward and backward in the above embodiment, and the container and the food inside the drawer part 32 is vertically elevated by the operation of the driving device 40 and the elevation device 80 inside the door 30.

The elevation device 80 may be provided in the region of the front space of the inside of the drawer part 32. Thus, the elevation device 80 may elevate the food in the region of the front space among the entire region of the drawer part 32.

A manipulation part 301 or a manipulation device 302 may be provided at one side of the door part 31, and the driving part 40 is installed inside the door part 31. Also, the pulling-out operation of the drawer door 30 and/or the elevation of the elevation device 80 may be carried out by the manipulation of the manipulation part 301 or the manipulation device 302.

The drawer part 32 is provided with the elevation device 80. The elevation device 80 is elevated by the driving device. Since the constituent of the drawer door 30 and constituent of the driving device 40 and the elevation device 80 are the same as those according to the foregoing embodiment, their detailed descriptions will be omitted.

A plurality of containers 361 may be provided in the elevation device 80. The container 361 may be a sealed container such as a kimchi passage, and a plurality of the containers 361 may be seated on the elevation device 80. The container 361 may be elevated together with the support member 80 when the elevation device 35 is elevated.

Thus, in the state in which the container 361 ascends, at least a portion of the drawer part 32 may protrude, and thus, the user may easily lift the container 361.

The elevation device 80 may interfere with the rotation door 20 in the rotation door 20 is opened even though the drawer door 30 is withdrawn. Thus, the elevation device 80 may ascend in a state in which the rotation door 20 is closed. For this, a door switch for detecting the opening/closing of the rotation door 20 may be further provided.

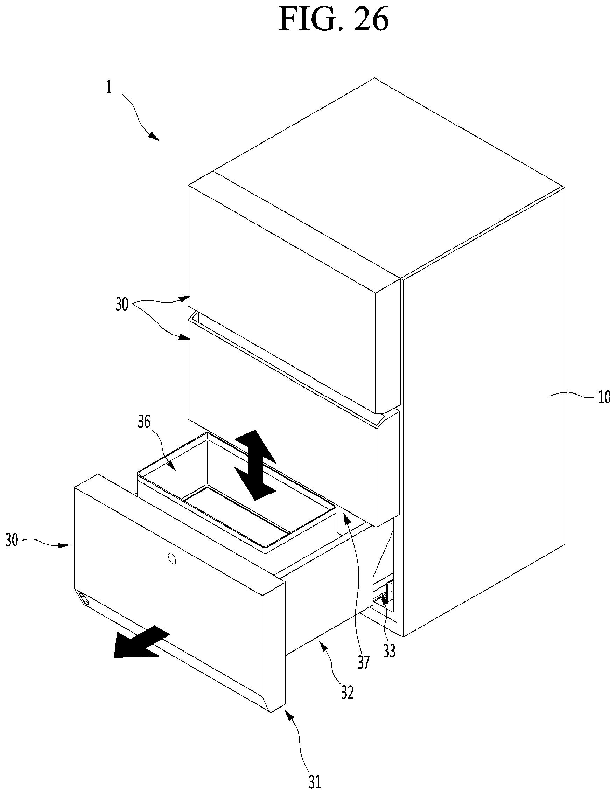

FIG. 26 is a perspective view of a refrigerator according to another embodiment.

Referring to FIG. 26, a refrigerator 1 according to another embodiment includes a cabinet 10 defining a storage chamber therein and a door opening and closing an opened front surface of the cabinet 10, which define an outer appearance of the refrigerator 1.

The door includes a drawer door 30 that defines an entire outer appearance of the refrigerator 1 in a state in which the door 2 is closed and is withdrawn forward and backward. A plurality of the drawer doors 30 may be continuously arranged in the vertical direction. Also, the drawer doors 30 may be independently withdrawn by the user's manipulation. The drawer door 30 is provided with the driving device 40 and the elevation device 80.

The driving part 40 is installed in the door part 31, and the elevation part 80 is provided inside the drawer part 32. Also, the driving device 40 and the elevation device 80 are connected to each other when the door part 31 and the drawer part 32 are coupled to each other.

Also, the elevation device 80 may be disposed in the front space S1 of the total storage chamber of the drawer part 32.

The insertion and withdrawal of the drawer door 30 and the elevation of the elevation device 80 may be individually performed. After the drawer door 30 is withdrawn, the elevation device 80 may ascend. Then, after the elevation device 80 descends, the insertion of the drawer door 30 may be continuously performed.

Also, when the plurality of drawer doors 30 are vertically arranged, the elevation device 80 inside the drawer door 30, which is relatively downwardly disposed, may be prevented from ascending in a state where the drawer door 30 is relatively drawn upward. Thus, the drawer door 30 may be prevented from interfering with the drawer door 30 in which the food and container are withdrawn upward.

Also, although the elevation device 80 ascends in the state in which the drawer door 30 that is disposed at the uppermost side is withdrawn in FIG. 26, all of the drawer doors 30 disposed at the upper side may also be elevated by the elevation device 80 that is provided inside.

If a height of each of the drawer doors 30 disposed at the upper side is sufficiently high, only the drawer door 30 disposed at the lowermost position or the elevation device 35 of the of drawer doors 30 disposed relatively downward may be elevated.

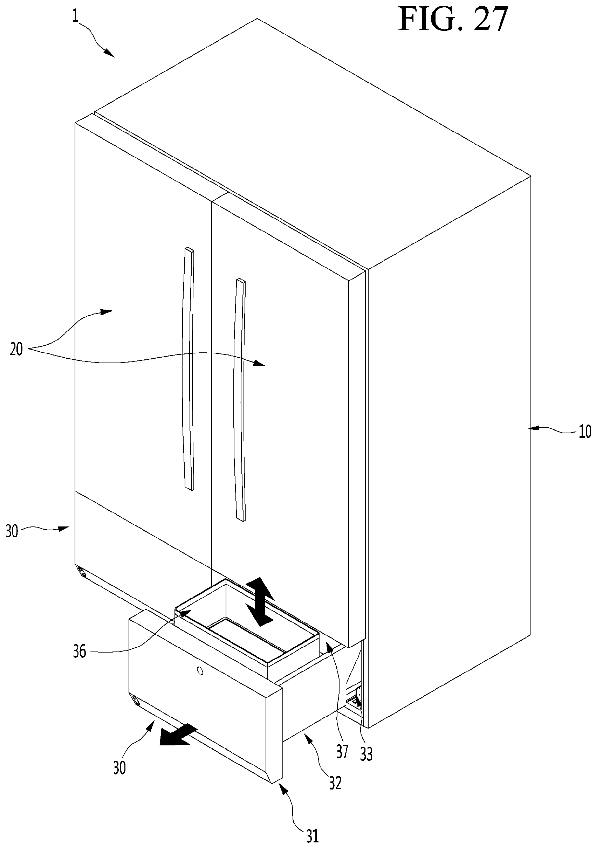

FIG. 27 is a perspective view of a refrigerator according to another embodiment.

As illustrated in the drawings, a refrigerator 1 according to another embodiment includes a cabinet 10 defining a storage chamber therein and a door opening and closing an opened front surface of the cabinet 10, which define an outer appearance of the refrigerator 1.

The inside of the cabinet 10 may be divided into an upper space and a lower space. If necessary, the upper and lower storage chambers may be divided again into left and right spaces.

The door may include a rotation door 20 which is provided in an upper portion of the cabinet 10 to open and close the upper storage chamber and a drawer door 30 disposed in a lower portion of the cabinet 10 to open and close the lower storage chamber.

Also, the lower space of the cabinet may be divided into left and right spaces. The drawer door 30 may be provided in a pair so that the pair of drawer doors 30 respectively open and close the lower spaces. A pair of the drawer doors 30 may be arranged on both sides of the right and left sides of the drawer door 30. The drawer door 30 includes the driving device 40 and an elevation device 80.

The driving part 40 is installed in the door part 31, and the elevation part 80 is provided inside the drawer part 32. Also, the driving device 40 and the elevation device 80 are connected to each other when the door part 31 and the drawer part 32 are coupled to each other. Also, the elevation device 80 may be disposed in the front space S1 of the total storage chamber of the drawer part 32.

The drawer door 30 may have the same structure as the drawer door according to the foregoing embodiment. Thus, the drawer door 30 may be inserted and withdrawn by user's manipulation. In the drawer door 30 is withdrawn, the support member 80 may ascend so that a user more easily accesses a food or container within the drawer door 30.

The following effects may be expected in the refrigerator according to the proposed embodiments of the present invention.

The refrigerator according to the embodiment, the portion of the storage chamber within the drawer door is elevated in the state in which the drawer door is withdrawn. Thus, when the food is accommodated in the drawer door disposed at the lower side, the user may not excessively turn its back to improve the convenience in use.

Particularly, in order to lift the heavy-weight food or the container containing the food, the user has to lift the food or container with a lot of power. However, the elevation within the drawer door may ascend up to a convenient position by driving the driving device to prevent the user from being injured and significantly improve the convenience in use.

Also, the driving device constituted by the electric devices for providing the power is provided inside the door part, and the elevation device for the elevation is provided inside the drawer part so that the driving device and the elevation device are not exposed to the outside to improve the outer appearance.

Particularly, the driving device constituted by the electric devices is disposed inside the door part, and it may be possible to prevent the user from accessing the door to prevent the occurrence of the safety accident.

Also, the driving part that occupies a large portion of the entire constituents is disposed in the door part to minimize the storage capacity loss of the drawer part. Also, the elevation device or the structure that is compactly folded and accommodated in the descending state is provided to secure the storage capacity in the refrigerator.

Also, the driving device is provided in the door to block the noise and reduce noise during the use.

Particularly, the screw holder for rotating the lever to which the substantially large load is applied may be allowed to move along the guide bar, thereby preventing the movement of the screw holder and significantly reducing the noise caused thereby.

Also, the guide bar may be disposed on each of both the sides of the screw to allow the screw holder to move more stably so that the power transmission for elevation is stably performed, and the power loss is prevented at the same time.

Also, the lubricant member may be provided in the screw holder through which the screw passes to contact the guide bar, thereby reducing the friction with the screw and ensuring the smooth movement of the screw holder.

Also, the screw and the rotation shaft of the gear of the motor assembly may be disposed to cross each other and be configured to be coupled to each other by the helical gear structure. Thus, the noise of the driving device may not be generated largely even when the food having the large load is accommodated.

Also, when the service is required in the case of the abnormal situation or the inspection, the door part and the drawer part may be separated from each other to perform the service through the door part in which the electric device is installed, thereby remarkably improve the service performance.

Also, the drive device is provided with the screw unit on both sides and provide the power to both sides of the elevation device to smoothly elevate the food or container having the high load.

Also, since both screw units have the driving force of one motor, the horizontal elevation of the elevation device without the separate control or constituent and without the deflection or tilting may be secured.

Also, the driving device is disposed inside the door, and the elevation device is disposed inside the drawer. Thus, the driving device and the elevation device may be prevented from being exposed to the outside during the use, and the safety and the outer appearance may be further improved.

## Claims

1. A refrigerator comprising:
a cabinet (10) configured to define a storage chamber;
a door (30) comprising a door part (31) configured to open and close the storage chamber and a drawer part (32) configured to provide the storage chamber; and
a rail configured to connect the door (30) to the cabinet (10), the rail being configured to insert and withdraw the door (30),
wherein the refrigerator further comprises:
a driving device (40) disposed on the door part (31) to provide power; and
an elevation device (80) disposed on the drawer part (32), the elevation device (80) being connected to the driving device (40) to vertically elevate a portion of the drawer part (32),
wherein the driving device (40) comprises:
a motor assembly (60) disposed at a central portion in left and right direction of the door part (31),
a pair of screw units (50, 50a) symmetrically disposed on each of both sides with respect to the motor assembly (60), each screw unit (50, 50a) being connected to the motor assembly (60) to operate at the same time; and
a pair of levers (42) configured to be rotated by the screw units (50, 50a), the levers (42) being connected to the elevation device (80) to provide power for elevating the elevation device (80),
wherein each screw unit (50, 50a) comprises:
a housing (51),
a screw (52, 52a) disposed in the housing (51), the screw (52, 52a) being gear-coupled to a gear of the motor assembly (60) to be rotated,
a screw holder (56, 56a) penetrated by the screw (52, 52a), the screw holder (56, 56a) having a screw thread corresponding to the screw (52, 52a), so that the screw holder (56, 56a) moves along the screw (52, 52a),
wherein the elevation device (80) includes:
an upper frame (82);
a lower frame (83); and
a scissors assembly (84) disposed between the upper frame (82) and the lower frame (83),
wherein the scissors assembly (84) includes a first rod (842a) having an extension part (842b) protruding to be connected to the lever (42) and a coupling part (842c) provided on an end of the extension part (842b),
wherein an accommodation part (421a) is provided in a rotation shaft of the lever (42), and
the coupling part (842c) that is coupled to the accommodation part (421a) is disposed on the elevation device (80), and
wherein an end of the coupling part (842c) has a non-circular shape.

2. The refrigerator according to claim 1, wherein the accommodation part (421a) accommodates the coupling part (842c) so as to be coupled to the coupling part (842c).

3. The refrigerator according to any one of the previous claims, wherein the motor assembly (60) comprises:
a motor disposed at an upper side; and
a plurality of gears connected to a rotation shaft of the motor to be rotated,
wherein the plurality of gears is continuously disposed in a vertical direction to extend up to a lower end of the screw (52, 52a).

4. The refrigerator according to claim 3, wherein a rotation shaft of the screw (52, 52a) and the rotation shaft of the motor and the gears are gear-coupled to cross each other.

5. The refrigerator according to any one of claims 1 to 4, wherein a lower end of the screw (52, 52a) and a gear disposed at a lowermost side of the motor assembly (60) are coupled to each other in a helical gear structure.

6. The refrigerator according to claim 1, wherein the drawer part (32) is mounted on the door part (31),
and
a front surface of the drawer part (32) is configured to cover the driving device (40).

7. The refrigerator according to claim 1, wherein a door cover (315) configured to cover the driving device (40) is disposed on a rear surface of the door part (31),
a cover opening (315b) that is opened at a position corresponding to the accommodation part (421a) is defined in the door cover (315), and
a drawer opening (35) disposed at a position corresponding to the coupling part (842c) is defined in a front surface of the drawer part (32).

8. The refrigerator according to claim 1, wherein the screw unit (50, 50a) further comprises a guide bar disposed parallel to the screw (52, 52a) inside the housing (51), the guide bar passing through the screw holder (56, 56a) to guide the movement of the screw (52, 52a).

9. The refrigerator according to claim 8, wherein the guide bars are provided in pair, the pair of guide bars are disposed on each of both sides with respect to each of the two screws (52, 52a).

## Patentansprüche

1. Kühlschrank, der aufweist:
ein Gehäuse (10), das konfiguriert ist, eine Aufbewahrungskammer zu definieren,
eine Tür (30), die einen Türteil (31), der konfiguriert ist, die Aufbewahrungskammer zu öffnen und zu schließen, und einen Schubladenteil (32) aufweist, der konfiguriert ist, die Aufbewahrungskammer bereitzustellen, und
eine Schiene, die konfiguriert ist, die Tür (30) mit dem Gehäuse (10) zu verbinden, wobei die Schiene so konfiguriert ist, dass sie die Tür (30) einführt und herauszieht,
wobei der Kühlschrank ferner aufweist:
eine am Türteil (31) angeordnete Antriebsvorrichtung (40), um Kraft bereitzustellen, und
eine am Schubladenteil (32) angeordnete Hebevorrichtung (80), wobei die Hebevorrichtung (80) mit der Antriebsvorrichtung (40) verbunden ist, um einen Abschnitt des Schubladenteils (32) vertikal anzuheben,
wobei die Antriebsvorrichtung (40) aufweist:
eine Motoranordnung (60), die an einem mittleren Abschnitt in rechter und linker Richtung des Türteils (31) angeordnet ist,
ein Paar Schraubeneinheiten (50, 50a), die beidseitig symmetrisch in Bezug auf die Motoranordnung (60) angeordnet sind, wobei jede Schraubeneinheit (50, 50a) mit der Motoranordnung (60) verbunden ist, um gleichzeitig zu arbeiten, und
ein Paar Hebel (42), die so konfiguriert sind, das sie durch die Schraubeneinheiten (50, 50a) gedreht werden, wobei die Hebel (42) mit der Hebevorrichtung (80) verbunden sind, um Kraft zum Heben der Hebevorrichtung (80) bereitzustellen,
wobei jede Schraubeneinheit (50, 50a) aufweist:
ein Gehäuse (51),
eine Schraube (52, 52a), die im Gehäuse (51) angeordnet ist, wobei die Schraube (52, 52a) mit einem Zahnrad der Motoranordnung (60) zahnradgekoppelt ist, um sich zu drehen,
einen Schraubenhalter (56, 56a), der durch die Schraube (52, 52a) durchdrungen wird, wobei der Schraubenhalter (56, 56a) ein Schraubengewinde aufweist, das der Schraube (52, 52a) entspricht, so dass sich der Schraubenhalter (56, 56a) längs der Schraube (52, 52a) bewegt,
wobei die Hebevorrichtung (80) aufweist:
einen oberen Rahmen (82),
einen unteren Rahmen (83) und
eine zwischen dem oberen Rahmen (82) und dem unteren Rahmen (83) angeordnete Scherenanordnung (84),
wobei die Scherenanordnung (84) eine erste Stange (842a) mit einem Verlängerungsteil (842b), der vorsteht, um mit dem Hebel (42) verbunden zu werden, und einem Kupplungsteil (842c), der an einem Ende des Verlängerungsteils (842b) vorgesehen ist, aufweist,
wobei ein Aufnahmeteil (421a) in einer Drehwelle des Hebels (42) vorgesehen ist, und
der Kupplungsteil (842c), der mit dem Aufnahmeteil (421a) gekoppelt ist, an der Hebevorrichtung (80) angeordnet ist, und
wobei ein Ende des Kupplungsteils (842c) eine nichtkreisförmige Form aufweist.

2. Kühlschrank nach Anspruch 1, wobei der Aufnahmeteil (421a) den Kupplungsteil (842c) aufnimmt, um mit dem Kupplungsteil (842c) gekoppelt zu sein.

3. Kühlschrank nach einem der vorhergehenden Ansprüche, wobei die Motoranordnung (60) aufweist:
einen an einer Oberseite angeordneten Motor; und
mehrere Zahnräder, die mit einer Drehwelle des Motors so verbunden sind, dass sie gedreht werden,
wobei die mehreren Zahnräder kontinuierlich so in einer vertikalen Richtung angeordnet sind, dass sie sich zu einem unteren Ende der Schraube (52, 52a) erstrecken.

4. Kühlschrank nach Anspruch 3, wobei eine Drehwelle der Schraube (52, 52a) und die Drehwelle des Motors und der Zahnräder so zahnradgekoppelt sind, dass sie sich gegenseitig kreuzen.

5. Kühlschrank nach einem der Ansprüche 1 bis 4, wobei ein unteres Ende der Schraube (52, 52a) und ein an einer untersten Seite der Motoranordnung (60) angeordnetes Zahnrad miteinander in einer Schrägzahnradstruktur verbunden sind.

6. Kühlschrank nach Anspruch 1, wobei der Schubladenteil (32) am Türteil (31) angebracht ist, und
eine Vorderseite des Schubladenteils (32) so konfiguriert ist, dass sie die Antriebsvorrichtung (40) abdeckt.

7. Kühlschrank nach Anspruch 1, wobei eine Türabdeckung (315), die so konfiguriert ist, dass sie die Antriebsvorrichtung (40) abdeckt, an einer Rückseite des Türteils (31) angeordnet ist,
eine Abdeckungsöffnung (315b), die an einer Position geöffnet ist, die dem Aufnahmeteil (421a) entspricht, in der Türabdeckung (315) definiert ist und
eine Schubladenöffnung (35), die an einer Position angeordnet ist, die dem Kupplungsteil (842c) entspricht, in einer Vorderseite des Schubladenteils (32) definiert ist.

8. Kühlschrank nach Anspruch 1, wobei die Schraubeneinheit (50, 50a) ferner eine Führungsstange aufweist, die parallel zur Schraube (52, 52a) innerhalb des Gehäuses (51) angeordnet ist, wobei die Führungsstange durch den Schraubenhalter (56, 56a) geht, um die Bewegung der Schraube (52, 52a) zu führen.

9. Kühlschrank nach Anspruch 8, wobei die Führungsstangen paarweise vorgesehen sind, wobei beide Führungsstangen in Bezug auf jede der zwei Schrauben (52, 52a) jeweils beidseitig angeordnet sind.

## Revendications

1. Réfrigérateur, comprenant :
une carrosserie (10) prévue pour définir un compartiment de stockage ;
une porte (30) comprenant une section de porte (31) prévue pour ouvrir et fermer le compartiment de stockage, et une section de tiroir (32) prévue pour fournir le compartiment de stockage ; et
un rail prévu pour raccorder la porte (30) à la carrosserie (10), ledit rail étant prévu pour l'insertion et l'extraction de la porte (30),
où le réfrigérateur comprend en outre :
un dispositif d'entraînement (40) disposé sur la section de porte (31) pour fournir une puissance ; et
un dispositif élévateur (80) disposé sur la section de tiroir (32), le dispositif élévateur (80) étant raccordé au dispositif d'entraînement (40) pour soulever verticalement une partie de la section de tiroir (32),
où le dispositif d'entraînement (40) comprend :
un ensemble moteur (60) disposé dans une partie centrale dans la direction de gauche à droite de la section de porte (31) ;
une paire d'unités à vis (50, 50a) disposées symétriquement de chaque côté par rapport à **l'ensemble** moteur (60), lesdites unités à vis (50, 50a) étant raccordées chacune à l'ensemble moteur (60) de manière à fonctionner simultanément ; et
une paire de leviers (42) prévus pour être pivotés par les unités à vis (50, 50a), lesdits leviers (42) étant raccordés au dispositif élévateur (80) pour fournir une puissance d'élévation audit dispositif élévateur (80),
où chaque unité à vis (50, 50a) comprend :
un carter (51),
une vis (52, 52a) disposée dans le carter (51), ladite vis (52, 52a) étant engrenée avec un pignon de l'ensemble moteur (60) pour être entraînée en rotation,
un support de vis (56, 56a) traversé par la vis (52, 52a), ledit support de vis (56, 56a) présentant un filet correspondant à la vis (52, 52a), de sorte que ledit support de vis (56, 56a) se déplace le long de la vis (52, 52a),
où le dispositif élévateur (80) comprend :
un cadre supérieur (82) ;
un cadre inférieur (83) ; et
un ensemble en pantographe (84) disposé entre le cadre supérieur (82) et le cadre inférieur (83),
où l'ensemble en pantographe (84) comprend une première bielle (842a) comportant une partie d'extension (842b) faisant saillie de manière à être raccordée au levier (42), et une partie d'accouplement (842c) prévue à une extrémité de la partie d'extension (842b), où une partie de réception (421a) est prévue dans un arbre rotatif du levier (42), et
la partie d'accouplement (842c) accouplée à la partie de réception (421a) est disposée sur le dispositif élévateur (80), et
où une extrémité de la partie d'accouplement (842c) est de forme non circulaire.

2. Réfrigérateur selon la revendication 1, où la partie de réception (421a) reçoit la partie d'accouplement (842c) de manière à être raccordée à la partie d'accouplement (842c).

3. Réfrigérateur selon l'une des revendications précédentes, où l'ensemble moteur (60) comprend :
un moteur disposé sur le haut ; et
une pluralité de pignons raccordés à un arbre rotatif du moteur pour être entraînés en rotation,
la pluralité de pignons étant disposée de manière continue dans la direction verticale de manière à s'étendre jusqu'à une extrémité inférieure de la vis (52, 52a).

4. Réfrigérateur selon la revendication 3, où un arbre rotatif de la vis (52, 52a) et l'arbre rotatif du moteur et les pignons sont engrenés de manière à se croiser.

5. Réfrigérateur selon l'une des revendications 1 à 4, où l'extrémité inférieure de la vis (52, 52a) et un pignon disposé au plus bas de l'ensemble moteur (60) sont raccordés l'un à l'autre dans une structure d'engrenage hélicoïdal.

6. Réfrigérateur selon la revendication 1, où la section de tiroir (32) est montée sur la section de porte (31), et
une surface avant de la section de tiroir (32) est prévue pour couvrir le dispositif d'entraînement (40).

7. Réfrigérateur selon la revendication 1, où un couvercle de porte (315) prévu pour couvrir le dispositif d'entraînement (40) est disposé sur une surface arrière de la section de porte (31),
une ouverture de couvercle (315b) ouverte à un emplacement correspondant à la partie de réception (421a) est définie dans le couvercle de porte (315), et
une ouverture de tiroir (35) disposée à un emplacement correspondant à la partie d'accouplement (842c) est définie dans une surface avant de la section de tiroir (32).

8. Réfrigérateur selon la revendication 1, où l'unité à vis (50, 50a) comprend en outre une tige de guidage disposée parallèlement à la vis (52, 52a) à l'intérieur du carter (51), ladite tige de guidage traversant le support de vis (56, 56a) pour guider le déplacement de la vis (52, 52a).

9. Réfrigérateur selon la revendication 8, où les tiges de guidage sont prévues par paires, les tiges de guidage étant disposées sur chacun des deux côtés par rapport à chacune des vis (52, 52a).
